# FASCICULE DE BREVET EUROPEEN

(11) **EP 3 558 499 B1**
(45) Date de publication et mention de la délivrance du brevet: **25.11.2020**
(21) Numéro de dépôt: 17822406.9
(22) Date de dépôt: 13.12.2017
(51) Int. Cl.: B01D 63/06, B01D 46/24, B01D 65/08, B22F 3/00, B22F 3/105, B22F 5/10, B22F 5/00, B33Y 10/00, B33Y 80/00, C04B 111/00, B22F 3/11, C04B 38/00

(54) **ELEMENT DE SEPARATION PAR FLUX TANGENTIEL INTEGRANT DES CANAUX FLEXUEUX**
QUERSTROM-TRENNELEMENT MIT GEWUNDENEN KANÄLEN
TANGENTIAL FLOW SEPARATION ELEMENT INCORPORATING FLEXUOUS CHANNELS

(30) Priorité: 21.12.2016 FR 1663058
(43) Date de publication de la demande: 30.10.2019
(73) Titulaire: Technologies Avancées & Membranes Industrielles, 26110 Nyons (FR)
(72) Inventeur: LESCOCHE, Philippe, 26110 Piegon (FR); ANQUETIL, Jérôme, 84110 Vaison la Romaine (FR)
(74) Mandataire: Cabinet Beau de Loménie
(86) Numéro de dépôt international: PCT/FR2017/053537
(87) Numéro de publication internationale: WO 2018/115639

(56) Documents cités:
- EP-A1- 0 813 445
- DE-A1- 19 542 531
- FR-A1- 3 024 663
- FR-A1- 3 024 664
- FR-A1- 3 024 665
- GB-A- 2 223 690
- LOW ZE-XIAN ET AL: "Perspective on 3D printing of separation membranes and comparison to related unconventional fabrication techniques", JOURNAL OF MEMBRANE SCIENCE, ELSEVIER BV, NL, vol. 523, 8 octobre 2016 (2016-10-08), pages 596-613, XP029823542, ISSN: 0376-7388, DOI: 10.1016/J.MEMSCI.2016.10.006

## Description

La présente invention concerne le domaine technique des éléments de séparation par flux tangentiel d'un milieu fluide à traiter en un filtrat et un rétentat, communément appelés membranes de filtration.

Plus précisément, l'invention concerne de nouvelles géométries de canaux de ces éléments de séparation permettant d'augmenter le flux du filtrat et/ou de réduire la consommation d'énergie des installations mettant en œuvre ces éléments de séparation.

L'invention concerne aussi un procédé de fabrication par méthode additive de tels éléments de séparation par flux tangentiel.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective qui permet, sous l'action d'une force de transfert, le passage ou l'arrêt de certains composants du milieu fluide à traiter. Le passage ou l'arrêt des composants résulte de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de structures et textures différentes. Les membranes sont, en général, constituées d'un support poreux qui assure la résistance mécanique de la membrane et qui, définissant le nombre et la morphologie des canaux, détermine la surface filtrante totale de la membrane. C'est en effet sur les parois intérieures de ces canaux qu'une couche dite couche séparatrice, couche de filtration, couche de séparation, couche active ou peau assure la séparation. Durant la séparation, le transfert du fluide filtré s'effectue à travers la couche séparatrice, puis ce fluide se répand dans la texture poreuse du support pour se diriger vers la surface périmétrique extérieure du support poreux. Cette partie du fluide à traiter ayant traversée la couche de séparation et le support poreux est appelée perméat ou filtrat et se trouve récupérée par une chambre de collecte entourant la membrane. L'autre partie est appelée rétentat et est, le plus souvent, réinjectée dans le fluide à traiter en amont de la membrane, grâce à une boucle de circulation.

De manière classique, quand le support est en matériau céramique, le support est d'abord fabriqué selon la forme souhaitée par extrusion, puis fritté à une température et pendant un temps suffisant pour assurer la solidité requise, tout en conservant dans la céramique obtenue la texture poreuse ouverte et interconnectée voulue. Ce procédé contraint à l'obtention d'un ou plusieurs canaux rectilignes à l'intérieur desquels sont ensuite déposées et frittées la ou les couches séparatrices. Les supports sont traditionnellement de forme tubulaire et comportent un ou plusieurs canaux rectilignes aménagés parallèlement à l'axe central du support. En général, la surface interne des canaux est lisse et ne présente aucune irrégularité.

Or, il a été constaté que les membranes de filtration fabriquées à partir de supports ayant de telles géométries se heurtent à des problèmes de colmatage et présentent, de ce fait, des performances limitées en termes de débit. En effet, les petites particules et les macromolécules peuvent être adsorbées sur la surface de la couche séparatrice ou s'y déposer en formant un gel ou un dépôt, elles peuvent même pénétrer dans la porosité et bloquer certains pores.

Le principe de toute séparation membranaire, et notamment tangentielle, mettant en œuvre des éléments de filtration, réside dans un transfert sélectif dont l'efficacité est dépendante de la sélectivité de la membrane (la couche active) et de la perméabilité (flux) de l'élément de filtration considéré dans son entier (support + couche active). La sélectivité et la perméabilité ne sont pas seulement déterminées par les caractéristiques de la couche active et de son support car elles peuvent être réduites ou limitées par l'apparition d'un colmatage résultant d'une polarisation de concentration, d'un dépôt ou d'un blocage des pores.

Le phénomène de polarisation de concentration opère lors d'une opération de filtration lorsque les macromolécules présentes dans le liquide à traiter se concentrent à l'interface membrane/solution où elles exercent une contre-pression osmotique opposée à la force de séparation ou rétrodiffusent dans le cœur du liquide à traiter selon la loi de Fick. Le phénomène de polarisation de concentration résulte de l'accumulation des composés retenus au voisinage de la membrane du fait de la perméation du solvant.

C'est lorsque la concentration en particules à la surface de la membrane augmente jusqu'à provoquer l'apparition d'une phase condensée sous forme d'un gel ou d'un dépôt cohésif qu'il apparait une résistance hydraulique additionnelle à celle de la membrane.

Le blocage des pores opère lorsqu'il y a intrusion de particules de tailles inférieures ou égales à celles des pores, ce qui entraîne une réduction de la surface filtrante.

Le colmatage, sa réversibilité ou son irréversibilité, sont des phénomènes complexes qui dépendent de l'élément de filtration et en particulier des couches séparatrices, du liquide à traiter et des paramètres opératoires.

Le colmatage est un frein important à l'attractivité économique de la filtration car il conduit, lors du dimensionnement des installations de filtration, à accroître les surfaces installées afin de satisfaire les besoins en volumes à traiter d'une part et il rend nécessaire la mise en œuvre de moyens techniques spécifiques pour y remédier a postériori, tels des cycles de nettoyage utilisant des détergents ou des rétro-filtrations périodiques d'autre part.

Dans l'art antérieur, il a déjà été proposé de nombreuses solutions techniques afin d'augmenter le flux de filtrat visant à réduire le phénomène de colmatage par la création d'un régime d'écoulement turbulent à l'intérieur du canal d'un élément filtrant.

Selon un premier type de solution, il a été proposé d'introduire dans les canaux des éléments tubulaires de filtration, des hélices ou des vis destinés à créer des turbulences ou vortex, comme cela est enseigné par le brevet US 3 648 754 ou dans la publication "Reduction of membrane fouling using a helical baffle for cross flow microfiltration" Scholl of chemical engineering, University Sains Malaysia - 2003, A.L. Ahmad, A.Mariadas, M.M.D. Zulkali. L'hélice introduite dans le canal est un objet rapporté qui nécessite d'être fixé (le plus souvent à l'entrée du canal). L'introduction dans chaque canal de cette hélice et sa fixation à l'entrée de chaque canal s'avère difficile à réaliser. Par ailleurs, le diamètre de l'hélice est inférieur à celui du canal proprement dit pour permettre son introduction et si besoin aussi son extraction. Il s'ensuit l'existence d'un jeu qui fait que l'hélice flotte et peut vibrer librement dans le canal entrainant un frottement contre la couche active qu'elle endommage irréversiblement. De plus, l'existence d'un jeu génère une fuite latérale qui court-circuite la circulation du fluide selon l'hélice, ce qui réduit l'efficacité de l'hélice.

Un autre type de solution vise la réalisation d'empreintes ou de reliefs sur la paroi interne des canaux pour créer à proximité de la surface filtrante, une perturbation pour le milieu fluide, limitant ainsi l'accumulation de matière et le colmatage. Le brevet EP 0 813 445 propose que chaque canal comporte dans sa paroi, une rainure hélicoïdale à pas simple, double ou triple, avec une section transversale de l'ordre de 25% de la section totale du canal. La demande FR 2 736 843 enseigne de réaliser des tubes poreux comportant un unique canal dont les parois comportent des empreintes, alors que la paroi périphérique du support est lisse. Pour cela, le tube poreux est mis en forme, au moyen d'une filière d'extrusion qui comporte une broche cylindrique disposée suivant son axe, la broche ou la matrice de sortie de la filière étant montée rotative et de section non circulaire.

La réalisation de rainures ou d'empreintes sur la surface interne des canaux n'impose pas une trajectoire hélicoïdale à la totalité du milieu fluide, limitant l'intérêt de telles solutions. Par ailleurs, la technique de fabrication de ces éléments de séparation est limitée à certains types d'empreintes, à savoir des empreintes qui sont continues d'une extrémité à l'autre de l'élément de séparation et qui ne peuvent engendrer aucune variation de la section de passage du canal. De plus, elle ne peut être transposée à la fabrication d'éléments de séparation comportant plusieurs canaux internes. Or, les éléments de séparation multicanaux sont de plus en plus recherchés car ils permettent d'augmenter la surface filtrante et d'ainsi améliorer les performances.

Dans le même but, la demande de brevet FR 3 024 665 propose un élément de séparation par flux tangentiel d'un milieu fluide à traiter en un filtrat et un rétentat. Cet élément comporte un support poreux rigide monobloc avec au moins un canal pour la circulation du milieu fluide à traiter entre une entrée et une sortie. Le support poreux comporte une surface extérieure de récupération du filtrat ayant traversé le support.

Ce document propose de réaliser à partir de la paroi interne des canaux, des obstacles à la circulation du fluide à filtrer ayant une continuité de matériau et de texture poreuse avec le support. Selon la demande de brevet FR 3 024 664, au moins un canal présente un obstacle se présentant en particulier sous la forme d'une hélice aménagée sur la paroi interne du support. De tels obstacles gênent ou perturbent le passage du fluide en obligeant leur contournement, d'où la création de turbulences propices à une réduction du colmatage, avec cependant comme inconvénient majeur la création simultanée, immédiatement en aval de chaque obstacle, d'une zone inopérante où la vitesse du fluide est quasi nulle.

Un autre type de solution concerne la création de vortex de Dean pour réduire le colmatage et augmenter le flux de perméat dans des membranes organiques d'ultrafiltration. Ainsi, la publication « Developing lengths in woven and helical tubes with Dean vortices flows » Engineering Applications of Computational Fluid Mechanics Vol. 3, No. 1, pp. 123-134 (2009) F. Springer, E. Carretier, D. Veyret, P. Moulin, traite de manière théorique et par simulation numérique de l'apparition de vortex de Dean et des augmentations de vitesse qu'ils induisent localement dans des fibres creuses organiques de section circulaire courbées de manière hélicoïdale, avec cependant comme inconvénients majeurs une limitation du diamètre de ladite section circulaire à un maximum de 2 mm. De plus, les modalités de courbure de la fibre organique telle que décrites dans cette publication induisent une dépendance entre le pas et le diamètre des spires.

Dans ce contexte, la présente invention se propose de fournir de nouveaux éléments de filtration rigides qui présentent une structure monocanale ou multicanale avec une géométrie adaptée pour augmenter le flux du filtrat et réduire la consommation d'énergie des installations mettant en œuvre ces éléments de séparation.

Pour atteindre cet objectif, l'objet de l'invention concerne un élément de séparation par flux tangentiel d'un milieu fluide à traiter en un filtrat et un rétentat, ledit élément de séparation comportant un support poreux rigide monobloc à l'intérieur du volume duquel au moins un canal pour la circulation du milieu fluide à traiter est aménagé entre une entrée pour le milieu fluide à traiter et une sortie pour le rétentat, ce support poreux rigide monobloc comportant une surface extérieure de récupération du filtrat ayant traversé ledit support. Selon l'invention, au moins un canal présente entre l'entrée et la sortie, un volume flexueux de circulation défini par le déplacement autour d'un axe de référence selon une trajectoire curviligne, d'une section plane génératrice et cet axe de référence ne traverse pas ladite section génératrice et se trouve contenu dans le volume du support poreux.

L'élément de séparation comporte également en combinaison l'une et/ou l'autre des caractéristiques additionnelles suivantes :
- le volume flexueux de circulation d'au moins un canal est défini sur une partie seulement de sa longueur prise entre l'entrée et la sortie ou sur toute sa longueur de son entrée à sa sortie ;
- le support poreux rigide monobloc comporte plusieurs canaux de circulation pour le milieu fluide aménagés à l'intérieur dudit support ;
- au moins un canal présente une section génératrice avec une aire constante ou variable ;
- au moins un canal présente une section génératrice avec une forme constante ou variable ;
- la section génératrice d'au moins un canal est écartée de l'axe de référence d'une distance constante ;
- au moins un canal est écarté de l'axe de référence d'une distance variable ;
- l'axe de référence est tangent à la section génératrice d'au moins un canal ;
- une série de plusieurs canaux présentant des sections génératrices écartées de l'axe de référence d'une distance R adaptée pour être séparés entre eux par des cloisons de séparation ;
- la section génératrice d'au moins un canal évolue selon une trajectoire résultant d'un mouvement de translation de direction constante ou variable combiné sur au moins une portion prise entre l'entrée et la sortie, à un mouvement de rotation autour de l'axe de référence selon un pas constant ou variable et selon un sens lévogyre ou dextrogyre ;
- la trajectoire présente un pas p compris entre 0.1 mm et 250 mm et la distance entre la trajectoire curviligne et l'axe de référence est compris entre 0.1 mm et 100 mm ;
- la section génératrice d'au moins un canal prise sur au moins une portion entre l'entrée et la sortie, évolue selon une trajectoire hélicoïdale ;
- la section génératrice d'au moins un canal, prise sur une portion limitée à partir de l'entrée et de la sortie, évolue selon une trajectoire résultant d'un mouvement de translation parallèle à l'axe de référence ;
- au moins un canal présente une section génératrice, s'étendant perpendiculairement ou parallèlement à l'axe de référence ;
- le support poreux est réalisé en un matériau choisi parmi les matériaux organiques tels que Polyamide, polyéthercétonecétone, polystyrène, Alumide, polyphénylsulfone, Elastomères fluorés thermoplastiques, Polypropylène, Polyéthylène, Epoxy, Acrylate, Acrylonitrile butadiène styrène, Polyméthacrylate de méthyle, Polycarbonate, Nylon, polyétherimide, Acrylonitrile styrène acrylate, acide polylactique, Polychlorure de vinyle et leurs mélanges, choisi parmi les matériaux inorganiques suivants tels que Oxyde d'aluminium, Oxyde de titane, Oxyde de zirconium, Titanate d'aluminium, Nitrure d'aluminium, Nitrure de titane, Nitrure de bore, Nitrure de silicium, Sialon, Carbone graphite, Carbure de silicium, Carbure de tungstène et leurs mélanges, choisi parmi les matériaux métalliques suivants tels que Aluminium, Alliages d'aluminium, Alliages de cobalt et de chrome, Alliages de nickel, Alliages de nickel et de chrome, Aciers et aciers inoxydables, Titane, Alliages de titane, Alliages de cuivre et d'étain, Alliages de cuivre, d'étain et d'aluminium, Alliages de cuivre et de zinc et leurs mélanges ;
- un support poreux et au moins une couche séparatrice continûment déposée sur la paroi interne de chaque canal chacune constituées d'une céramique, choisie parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium éventuellement en mélange avec un autre matériau céramique ;
- les canaux présentent des diamètres hydrauliques appartenant à la gamme allant de 0,5 mm à 20 mm ;
- chaque canal présente un diamètre hydraulique constant ou variable ;
- le support présente un diamètre moyen de pores appartenant à la gamme allant de 4 µm à 100 µm ;
- le diamètre moyen de pores correspond à la valeur d50 de la distribution volumique, pour laquelle 50% du volume total des pores correspondent au volume des pores de diamètre inférieur à ce d50 ; la distribution volumique étant obtenue par pénétration de mercure, par exemple selon la technique décrite dans la norme ISO 15901-1 :2005.

Un autre objet de l'invention est de proposer un nouveau procédé de fabrication d'un élément de séparation par flux tangentiel dans lequel le support est réalisé par formation de strates élémentaires superposées et liées successivement entre elles, de manière à faire croître progressivement la forme tridimensionnelle du support dans lequel est aménagé au moins un canal flexueux conforme à l'invention.

Par ailleurs, le procédé selon l'invention consiste à réaliser le support par technique additive pour laquelle grâce à un logiciel de conception par ordinateur, la forme du support est découpée en tranches, ces tranches étant réalisées une à une, sous la forme de strates élémentaires superposées et liées successivement entre elles, par la répétition des deux étapes suivantes : dépôt d'un lit continu, homogène et d'épaisseur constante d'une matière en poudre destinée à former le support, le lit couvrant une surface supérieure à la section dudit corps poreux à former, prise au niveau de la strate, consolidation localisée selon un motif déterminé pour chaque strate, d'une partie de la matière déposée pour créer la strate élémentaire, ces deux étapes étant répétées de manière à permettre à chaque répétition, la liaison simultanée de la strate élémentaire ainsi formée à la strate précédemment formée, de manière à faire croître progressivement la forme du support.

Diverses autres caractéristiques ressortent de la description faite ci-dessous en référence aux dessins annexés qui montrent, à titre d'exemples non limitatifs, des formes de réalisation de l'objet de l'invention.

La **Figure 1A** est une vue de face illustrant un premier exemple de réalisation d'un élément de séparation conforme à l'invention.

La **Figure 1B** est une vue en perspective de l'élément de séparation illustré à la **Fig. 1A****.**

La **Figure 1C** est une coupe longitudinale de l'élément de séparation prise selon les lignes **C-C** de la **Fig. 1A****.**

La **Figure 1D** est une vue montrant en perspective la trajectoire servant à la construction d'un canal flexueux aménagé dans l'élément de séparation illustré à la **Fig. 1B****.**

La **Figure 2A** illustre le mode de construction d'un volume flexueux de circulation pour un canal d'un élément de séparation conforme à l'invention.

La **Figure 2B** est une vue en perspective d'un volume flexueux de circulation conforme à l'invention montrant différentes formes possibles de réalisation référencées F1 à F5 et décrites par ailleurs.

La **Figure 3A** illustre un exemple de construction d'un volume flexueux de circulation conforme à l'invention pour lequel le plan contenant la section plane génératrice du volume est incliné de 90° par rapport à un axe de référence.

La **Figure 3B** illustre le volume flexueux de circulation conforme à l'invention obtenu selon le mode de construction illustré à la **Fig. 3A****.**

La **Figure 4A** illustre un exemple de construction d'un volume flexueux de circulation conforme à l'invention pour lequel le plan contenant la section génératrice du volume contient également l'axe de référence.

La **Figure 4B** illustre le volume flexueux de circulation conforme à l'invention obtenu selon le mode de construction illustré à la **Fig. 4A****.**

La **Figure 5A** illustre un exemple plus général de construction d'un volume flexueux de circulation conforme à l'invention pour lequel le plan contenant la section plane génératrice présente une inclinaison par rapport à l'axe de référence comprise entre 0° et 90°, les bornes étant exclues.

La **Figure 5B** illustre le volume flexueux de circulation conforme à l'invention obtenu selon le mode de construction illustré à la **Fig. 5A****.**

La **Figure 6** est une vue en perspective illustrant un exemple de réalisation d'un volume flexueux de circulation conforme à l'invention, pour lequel la distance entre la section plane génératrice et un axe de référence est tel que l'axe de référence est tangent à cette section génératrice.

La **Figure 7** est une vue en perspective illustrant un exemple de réalisation d'un volume flexueux de circulation conforme à l'invention, pour lequel la distance entre la section plane génératrice et un axe de référence varie.

La **Figure 8** est une vue en perspective illustrant un exemple de réalisation d'un volume flexueux de circulation conforme à l'invention, pour lequel la distance entre la section plane génératrice et un axe de référence est constante tandis que le pas est également constant et l'axe de référence curviligne.

La **Figure 9A** est une vue en perspective illustrant un exemple de réalisation d'un volume flexueux de circulation conforme à l'invention, pour lequel la trajectoire de sens lévogyre est reliée à une trajectoire de sens dextrogyre par une trajectoire rectiligne parallèle à l'axe de référence.

La **Figure 9B** est une vue en coupe transversale illustrant l'exemple de réalisation du volume flexueux de circulation conforme à la **Fig. 9A****.**

La **Figure 10A** est une vue en perspective illustrant un exemple de réalisation d'un volume flexueux de circulation conforme à l'invention, pour lequel la forme de la section génératrice varie.

La **Figure 10B** est une vue suivant un plan de coupe longitudinale passant par l'axe de référence illustrant l'exemple de réalisation du volume flexueux de circulation conforme à la **Fig. 10A****.**

La **Figure 11A** est une vue en perspective illustrant un exemple de réalisation d'un volume flexueux de circulation conforme à l'invention, pour lequel l'aire de la section génératrice varie.

La **Figure 11B** est une vue suivant un plan de coupe longitudinale passant par l'axe de référence illustrant l'exemple de réalisation du volume flexueux de circulation conforme à la **Fig. 11A****.**

La **Figure 12A** est une vue en perspective illustrant la portion d'un volume flexueux de circulation conforme à l'invention, pour laquelle des tronçons à trajectoire de sens lévogyre alternent directement avec des tronçons à trajectoire de sens dextrogyre.

La **Figure 12B** est une vue en perspective illustrant l'exemple de réalisation du volume flexueux de circulation conforme à la **Fig. 12A****.**

La **Figure 13A** est une vue en élévation d'un support pourvu d'une paire de canaux conformes à l'invention.

La **Figure 13B** est vue en perspective illustrant le support pourvu d'une paire de canaux conformes à l'invention et à la **Fig. 13A****.**

La **Figure 13C** est une vue en coupe longitudinale du support prise selon les lignes **C-C** de la **Fig. 13A****.**

La **Figure 13D** est une vue en perspective montrant, pris séparément, les volumes flexueux de circulation **V1** et **V2** conformes à l'invention pour chacun des deux canaux illustrés aux **Fig. 13A** à **13C****.**

La **Figure 13E** est une vue en perspective montrant, prises séparément, les trajectoires **H1** et **H2** des volumes flexueux **V1** et **V2** de circulation conformes à l'invention de chacun des deux canaux, illustrés aux **Fig. 13A** à **13D****.**

La **Figure 14A** est une vue en élévation d'un support pourvu de la duplication de sept paires de canaux conformes chacune aux **Fig. 13A à 13E****.**

La **Figure 14B** est une vue en perspective montrant les volumes flexueux de circulation conformes à l'invention tels qu'illustrés aux **Fig. 13A** à **13E****,** dupliqué sept fois au sein d'un même support.

La **Figure 15A** est une vue en élévation d'un support pourvu de vingt-trois canaux comportant trois catégories de canaux.

La **Figure 15B** est une vue en coupe longitudinale du support prise selon les lignes B-B de la **Fig. 15A****.**

La **Figure 15C** est une vue en perspective montrant le volume de circulation du canal central illustré à la **Fig. 15A****.**

La **Figure 15D** est une vue en perspective montrant le volume flexueux de circulation conforme à l'invention d'un des six canaux appartenant à la catégorie intermédiaire.

La **Figure 15E** est une vue en perspective montrant les volumes flexueux de circulation conformes à l'invention des six canaux appartenant à la catégorie intermédiaire et entourant le canal central.

La **Figure 15F** est une vue en perspective montrant le volume flexueux de circulation conforme à l'invention d'un des seize canaux appartenant à la catégorie périphérique.

La **Figure 15G** est une vue en perspective montrant les volumes flexueux de circulation conformes à l'invention d'un des seize canaux périphériques entourant les canaux de la catégorie intermédiaire.

La **Figure 15H** est une vue en perspective montrant au sein d'un même support, les volumes flexueux de circulation conformes à l'invention de vingt-deux canaux entourant un canal central tels qu'illustrés aux **Fig. 15D** à **15G****.**

En préliminaire, quelques définitions des termes utilisés dans le cadre de l'invention vont être données.

Par taille moyenne des grains, on entend la valeur d50 d'une distribution volumique pour laquelle 50% du volume total des grains correspondent au volume des grains de diamètre inférieur à ce d50. La distribution volumique est la courbe (fonction analytique) représentant les fréquences des volumes des grains en fonction de leur diamètre. Le d50 correspond à la médiane séparant en deux parties égales, l'aire située sous la courbe des fréquences obtenue par granulométrie, par diffraction laser qui est la technique de référence retenue dans le cadre de l'invention pour la mesure du diamètre moyen des grains. On se référera, en particulier, pour la technique de mesure du d50 :
- à la norme ISO 13320:2009, pour ce qui concerne la technique de mesure par granulométrie laser ;
- à la norme ISO 14488:2007, pour ce qui concerne les techniques d'échantillonnage de la poudre analysée ;
- à la norme ISO 14887:2000, pour ce qui concerne une mise en dispersion reproductible de l'échantillon de poudre dans le liquide avant la mesure par granulométrie laser.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égaies, l'aire située sous la courbe des fréquences obtenue par pénétration de mercure, pour des diamètres moyens de l'ordre de quelques nm ou, dans le cas de diamètre de pores plus faibles, par adsorption de gaz, et notamment de N₂, ces deux techniques étant retenues comme références dans le cadre de l'invention pour la mesure du diamètre moyen des pores.

En particulier, on pourra utiliser les techniques décrites dans :
- la norme ISO 15901-1 :2005, pour ce qui concerne la technique de mesure par pénétration de mercure ;
- les normes ISO 15901-2 :2006 et ISO 15901-3 :2007, pour ce qui concerne la technique de mesure par adsorption de gaz.

L'invention propose des éléments de séparation par flux tangentiel d'un milieu fluide à traiter en un filtrat et un rétentat, qui comporte un support poreux monolithique pourvu d'un ou de plusieurs canaux dont la géométrie est sélectionnée pour assurer une circulation selon une trajectoire flexueuse, sinueuse et avantageusement hélicoïdale à la majeure partie ou à la totalité du fluide à filtrer, l'autre partie du fluide pouvant circuler dans un ou plusieurs canaux non flexueux.

Dans ce support poreux, un ou plusieurs canaux de circulation pour le fluide à filtrer sont aménagés. Ces canaux de circulation présentent une entrée et une sortie. En général, l'entrée des canaux de circulation est positionnée à l'une des extrémités, cette extrémité jouant le rôle de zone d'entrée pour le milieu fluide à traiter et leur sortie est positionnée à l'autre extrémité du support jouant le rôle de zone de sortie pour le rétentat.

Dans de tels éléments de séparation, le corps constituant le support présente une texture poreuse. Cette texture poreuse est caractérisée par le diamètre moyen des pores déduit de leur distribution mesurée par porométrie par pénétration de mercure. Typiquement, le support poreux présente un diamètre moyen de pores appartenant à la gamme allant de 4 µm à 100 µm.

La texture poreuse du support est ouverte et forme un réseau de pores interconnectés, ce qui permet au fluide filtré par la couche séparatrice de filtration de traverser le support poreux et d'être récupéré en périphérie. Il est d'usage de mesurer la perméabilité à l'eau du support pour qualifier la résistance hydraulique du support. En effet, dans un milieu poreux, l'écoulement stationnaire d'un fluide visqueux incompressible est régi par la loi de Darcy. La vitesse du fluide dans la porosité (le perméat) est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Le perméat est donc, quant à lui, récupéré sur la surface périphérique du support poreux. La paroi des canaux est continûment recouverte par au moins une couche séparatrice de filtration qui assure la filtration du milieu fluide à traiter. Les couches séparatrices de filtration, par définition, se doivent d'avoir un diamètre moyen de pores inférieur à celui du support. Les couches séparatrices délimitent la surface de l'élément de séparation par flux tangentiel destinée à être en contact avec le fluide à traiter et le long de laquelle va circuler le fluide à traiter.

Les épaisseurs des couches séparatrices de filtration varient typiquement entre 1 µm et 100 µm d'épaisseur. Bien entendu, pour assurer sa fonction de séparation, et servir de couche active, les couches séparatrices présentent un diamètre moyen de pores inférieur au diamètre moyen de pores du support. Le plus souvent, le diamètre moyen de pores des couches séparatrices de filtration est au moins inférieur d'un facteur 3, et de préférence, d'au moins un facteur 5 par rapport à celui du support.

Les notions de couche séparatrice de microfiltration, ultrafiltration et nanofiltration sont bien connues de l'homme de l'art. Il est généralement admis que :
- les couches séparatrices de microfiltration présentent un diamètre moyen de pores compris entre 0,1 µm et 10 µm ;
- les couches séparatrices d'ultrafiltration présentent un diamètre moyen de pores compris entre 10 nm et 0,1 µm ;
- les couches séparatrices de nanofiltration présentent un diamètre moyen de pores compris entre 0,5 nm et 10 nm.

Il est possible que cette couche de micro ou d'ultrafiltration, dite couche active, soit déposée directement sur le support poreux, ou encore sur une couche intermédiaire de diamètre moyen de pores moindre, elle-même déposée directement sur le support poreux.

La couche de séparation peut, par exemple être constituée d'une céramique, choisie parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium éventuellement en mélange avec un autre matériau céramique.

La couche de séparation peut aussi, par exemple, être constituée par un ou des polymères tels que PAN, PS, PSS, PES, PVDF, acétate de cellulose ou autres polymères.

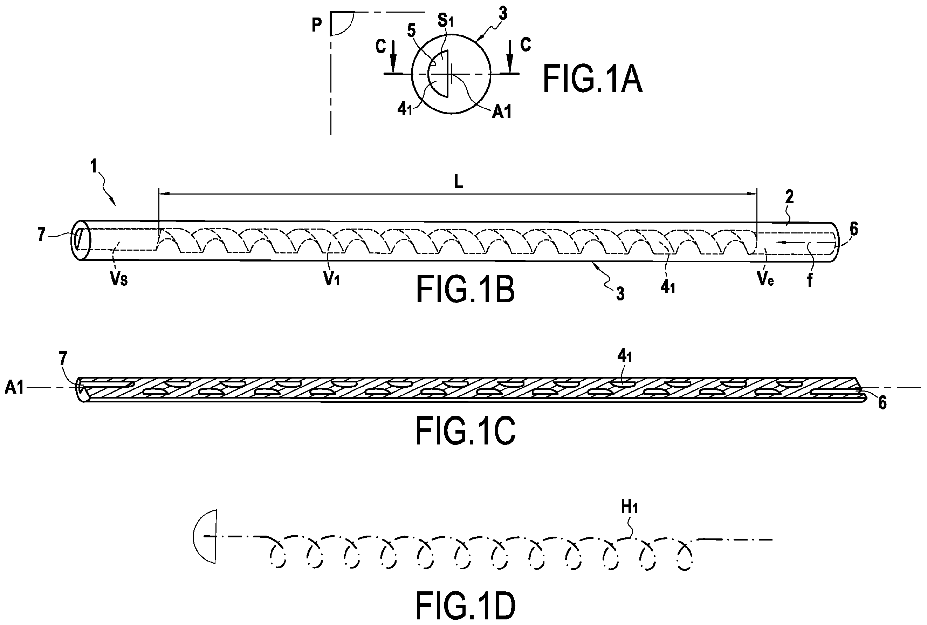

Les **Fig. 1A** à **1D** illustrent un premier exemple de réalisation d'un élément de séparation par flux tangentiel **1** conforme à l'invention comportant un support poreux **2** réalisé sous une forme allongée de sorte que ce support poreux est qualifiée de rectiligne. Le support poreux **2** illustré aux **Fig. 1A** à **1D** possède une section droite transversale circulaire et présente ainsi une surface extérieure **3** cylindrique, mais cette section droite transversale pourrait être quelconque ou polygonale. Selon une caractéristique préférée de réalisation de l'invention, la surface extérieure ou périphérique **3** du support présente un profil constant. En d'autres termes, la surface extérieure **3** ne présente aucune irrégularité de surface autre que celle engendrée par une rugosité de surface inhérente au matériau et au procédé de mise en forme proprement dit. Ainsi, la surface extérieure **3** ne possède pas de déformations ou d'empreintes.

Le support poreux **2** comporte au moins un canal et, d'une manière générale, plusieurs canaux **4i** de circulation pour le milieu fluide aménagés chacun à l'intérieur du support poreux **2.** (L'indice i est utilisé pour désigner de manière générale une caractéristique du support et prend des valeurs 1, 2, 3... en fonction du nombre de caractéristiques décrites dans les exemples de réalisation).

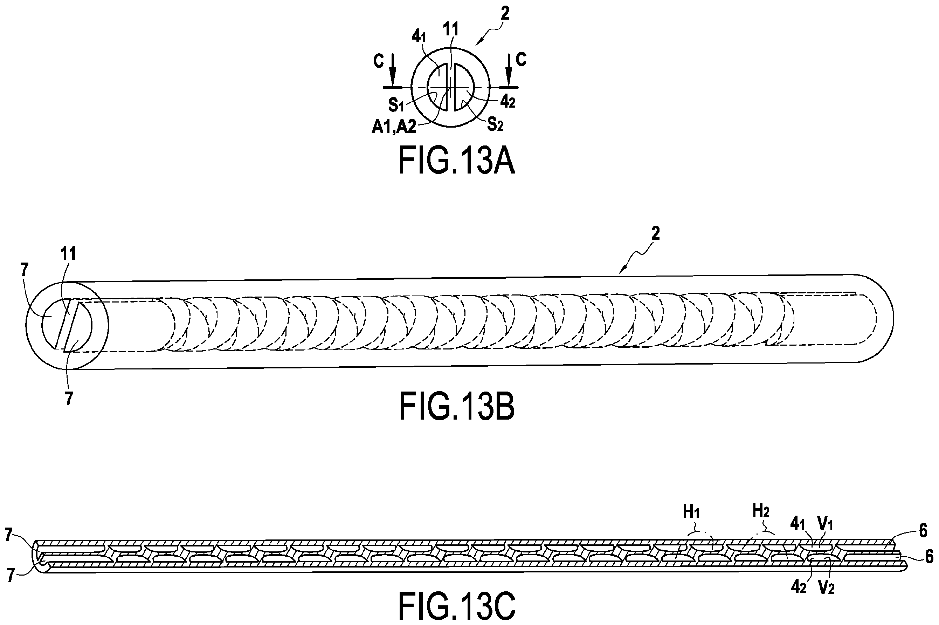

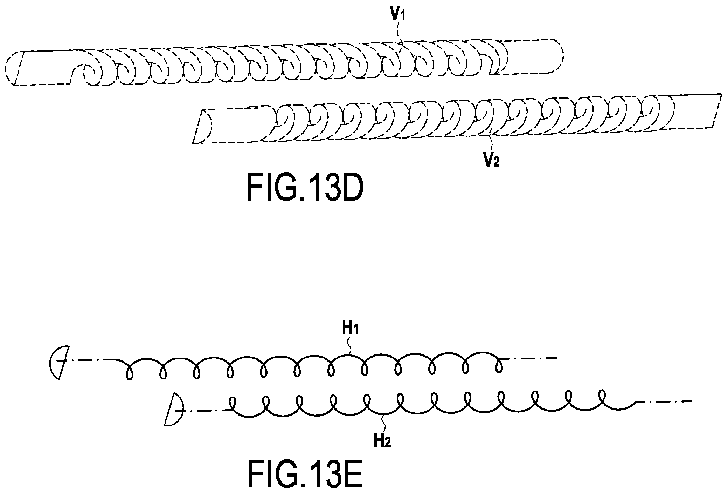

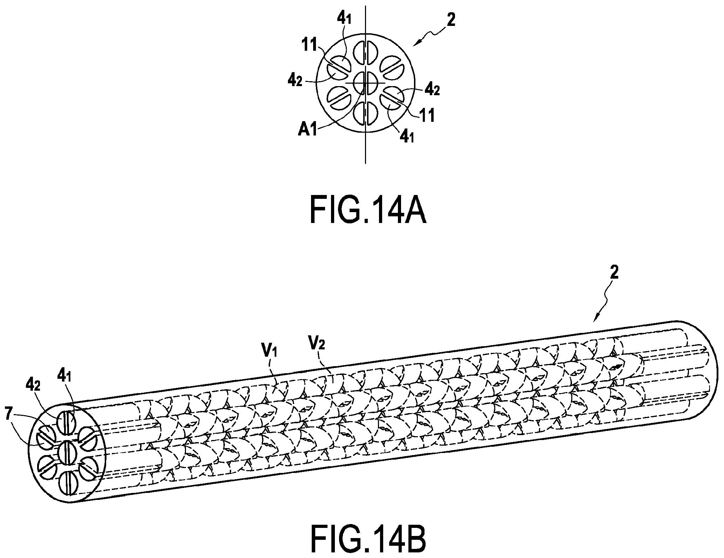

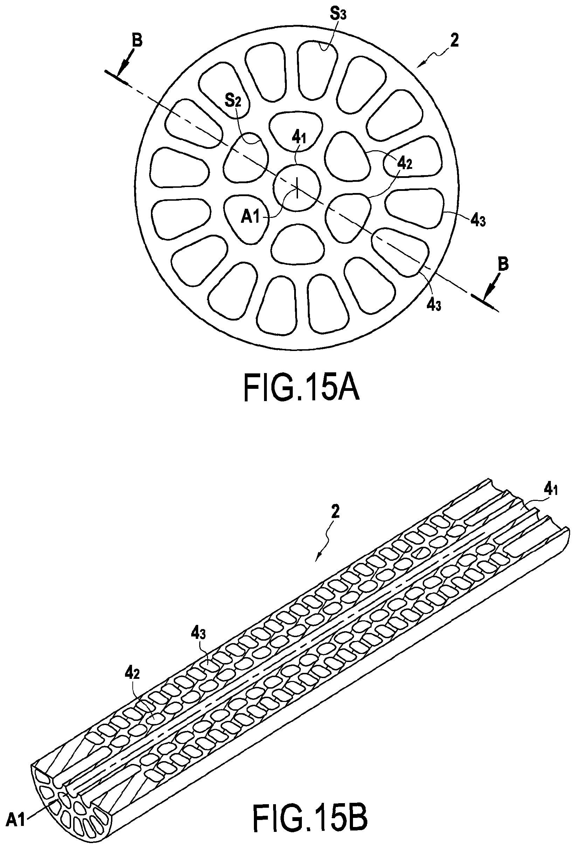

Dans un premier exemple de réalisation illustré aux **Fig. 1A** à **1D****,** le support poreux **2** comporte un unique canal **4₁** et dans un deuxième exemple de réalisation illustré à la **Fig. 13A****,** deux canaux **4₁** et **4₂**. Selon un troisième exemple de réalisation illustré par la **Fig. 14A****,** le support poreux **2** comporte quatorze canaux alors que selon un quatrième exemple illustré par la **Fig. 15A****,** le support poreux **2** comporte vingt-trois canaux répartis en trois catégories de canaux **4₁, 4₂** et **4₃**.

Chaque canal **4i** correspond à une zone du support poreux **2** ne comportant pas de matière poreuse et se trouve délimité à l'intérieur du support poreux, par une paroi **5** présentant une surface recouverte par au moins une couche séparatrice destinée à être en contact avec le milieu fluide à traiter, circulant à l'intérieur des canaux. Une partie du milieu fluide traverse la couche séparatrice déposée sur la paroi **5** et le support poreux **2,** de sorte que cette quantité du fluide traité, appelée perméat, s'écoule par la surface extérieure **3** du support poreux. Le milieu fluide à traiter circule dans le canal, entre une entrée **6** et une sortie **7** selon un sens de circulation représenté par la flèche **f.** L'entrée **6** est située à une extrémité du support poreux et la sortie **7** à l'autre extrémité du support poreux.

Conformément à l'invention, le support poreux **2** comporte au moins un canal **4i** dont la géométrie est adaptée pour augmenter le débit de filtrat. Cette géométrie est définie par le fait que chacun de ces canaux **4i** présente entre l'entrée **6** et la sortie **7,** au moins un volume flexueux de circulation **Vi** défini par le déplacement autour d'un axe de référence **Ai** selon une trajectoire curviligne **Hi,** d'une section génératrice **Si** située dans un plan **P** dit de référence. De plus, cet axe de référence **Ai** ne traverse pas ladite section génératrice **Si** et se trouve contenu dans le volume du support poreux **2.**

Il doit être compris qu'un canal **4i** conforme à l'invention comporte au moins un volume flexueux de circulation **Vi** tel que caractérisé ci-dessus. Ce volume flexueux de circulation **Vi** correspond bien entendu à une zone du support poreux **2** ne comportant pas de matière poreuse, et limitée par les parois du canal. Il est à noter que le support poreux **2** présente selon le plan **P**, entre sa surface extérieure **3** et la paroi **5** du canal prise, une épaisseur variable.

Ce volume flexueux de circulation **Vi** conforme à l'invention est défini entre l'entrée **6** et la sortie **7.** Ce volume flexueux de circulation **Vi** est présent sur une partie seulement de la longueur du canal prise entre l'entrée **6** et la sortie **7** ou sur toute la longueur du canal prise de son entrée à sa sortie. Bien entendu, le support poreux **2** peut comporter au moins un canal de circulation pour le milieu fluide à traiter ne comportant pas un volume flexueux de circulation **Vi** conforme à l'invention.

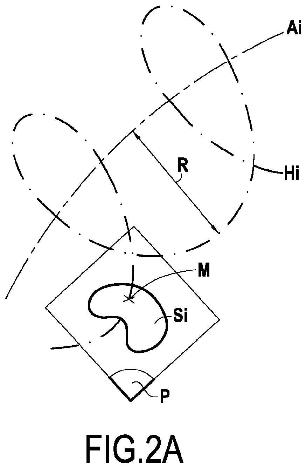

Le principe général de construction d'un canal flexueux présentant un volume de circulation **Vi** conforme à l'invention est particulièrement bien illustré avec la **Fig. 2A**. Le principe général de construction d'un canal flexueux consiste à faire suivre à une section plane génératrice **Si** une trajectoire curviligne **Hi** construite entre les deux extrémités de ce volume de circulation **Vi** par le mouvement d'un point **M** appartenant à cette section plane génératrice et situé à une distance **R** d'un axe de référence **Ai.** Le mouvement de ce point **M** suit une rotation autour de cet axe de référence **Ai** et une translation concomitante selon ce même axe de référence. Cette rotation peut être constante ou variable. De même, cette translation peut être constante ou variable. La distance **R** peut être également constante ou variable. Le point **M** est un point quelconque de la section génératrice **Si** qui s'établit dans un plan de référence **P.** La trajectoire curviligne **Hi** du volume de circulation **Vi** confère bien par ailleurs au canal, au moins sur la longueur de ce volume de circulation, un caractère flexueux.

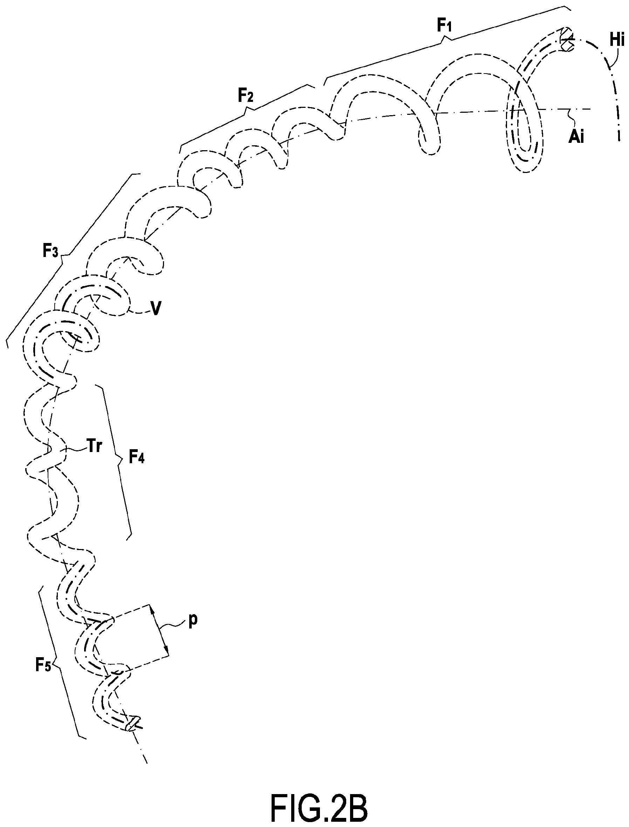

Il ressort de la description qui précède que le volume flexueux de circulation **Vi** du canal peut présenter des caractéristiques géométriques très diversifiées. Comme cela est illustré à la **Fig. 2B****,** l'axe de référence **Ai** peut-être rectiligne et/ou courbe sans point de rebroussement. Cet axe de référence **Ai** peut être rectiligne, selon une partie ou la totalité de la longueur du volume flexueux de circulation **Vi**. De même, cet axe de référence **Ai** peut être courbe, selon une partie ou la totalité de la longueur du volume flexueux de circulation **Vi**. Cet axe de référence **Ai** ne coupe pas la section génératrice **Si** c'est-à-dire qu'il se trouve toujours en dehors du volume flexueux de circulation **Vi**. Ainsi, cet axe de référence **Ai** peut être tangent à cette section génératrice **Si** ou être écartée d'une distance déterminée variable ou constante.

Comme le canal flexueux doit nécessairement être contenu à l'intérieur du volume du support poreux **2,** il en ressort que la trajectoire curviligne **Hi** et l'axe de référence **Ai** doivent eux-mêmes être contenus à l'intérieur du volume du support poreux **2.**

La trajectoire curviligne **Hi** peut présenter des caractéristiques géométriques très diversifiées en fonction des valeurs de la distance **R,** de la rotation et de la translation concomitante.

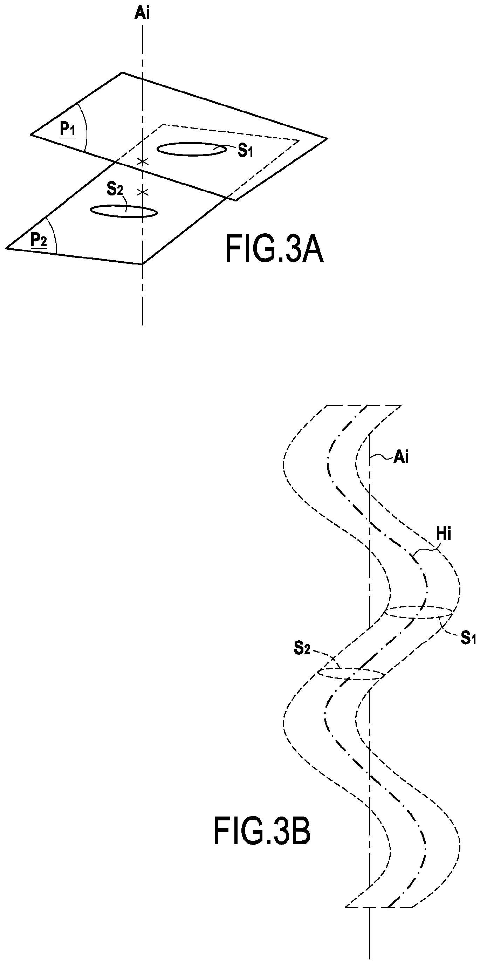

La morphologie du canal flexueux dépend de l'axe de référence **Ai,** de la trajectoire curviligne **Hi** et aussi des dimensions et de la forme de la section génératrice **Si** et de la position de cette section génératrice **Si** par rapport à la trajectoire curviligne **Hi** et à l'axe de référence **Ai.** Plus précisément, les **Fig. 3A** et **3B** illustrent le cas pour lequel une section circulaire **Si** contenue dans un plan perpendiculaire à l'axe de référence rectiligne **Ai** suit une trajectoire **Hi** hélicoïdale autour de l'axe de référence **Ai.** Selon cet exemple, le plan de référence **P** contenant la section circulaire **Si** est perpendiculaire à l'axe de référence rectiligne **Ai.** La rotation de la section circulaire **Si** autour de l'axe de référence rectiligne **Ai,** combinée à la translation de cette section circulaire **Si** selon l'axe de référence rectiligne **Ai** permet d'obtenir un canal flexueux dont la forme géométrique obtenue est connue sous le nom de « colonne torse ». Les **Fig. 3A** et **3B** montrent à titre d'illustration, uniquement deux sections circulaires **S1** et **S2** contenues chacune dans un plan **P1, P2** perpendiculaire à l'axe de référence rectiligne **Ai.**

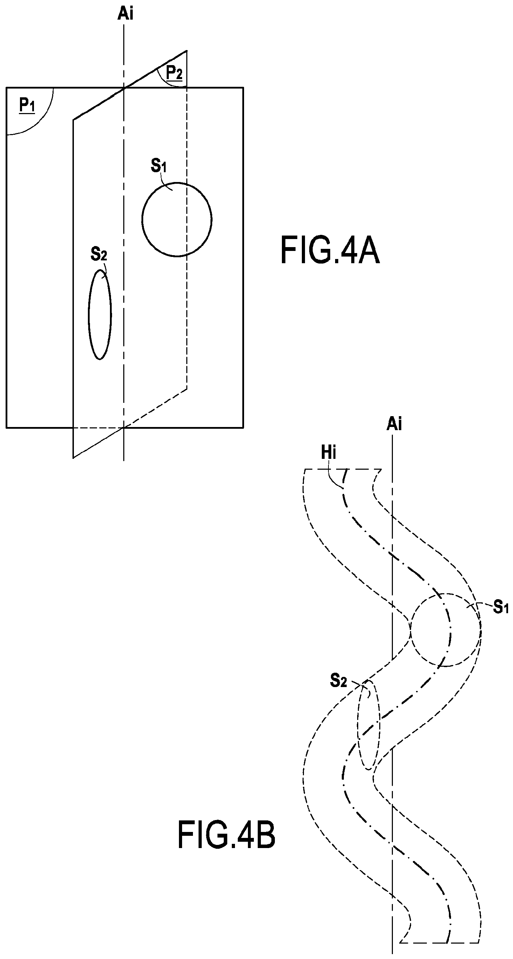

Les **Fig. 4A** et **4B** illustrent le cas pour lequel une section circulaire **Si** contenue dans un plan de référence contenant l'axe de référence rectiligne **Ai** suit une trajectoire **Hi** hélicoïdale autour de l'axe de référence **Ai.** Selon cet exemple, le plan de référence **P** contenant la section circulaire **Si** est parallèle à l'axe de référence rectiligne **Ai.** La rotation de la section circulaire **Si** autour de l'axe de référence rectiligne **Ai,** combinée à la translation de cette section circulaire **Si** selon l'axe de référence rectiligne **Ai** permet d'obtenir un canal flexueux dont la forme géométrique obtenue est connue sous le nom de « vis de Saint-Gilles ». Les **Fig. 4A** et **4B** montrent à titre d'illustration, uniquement deux sections circulaires **S1** et **S2** contenues chacune dans un plan **P1, P2** parallèle à l'axe de référence rectiligne **Ai.**

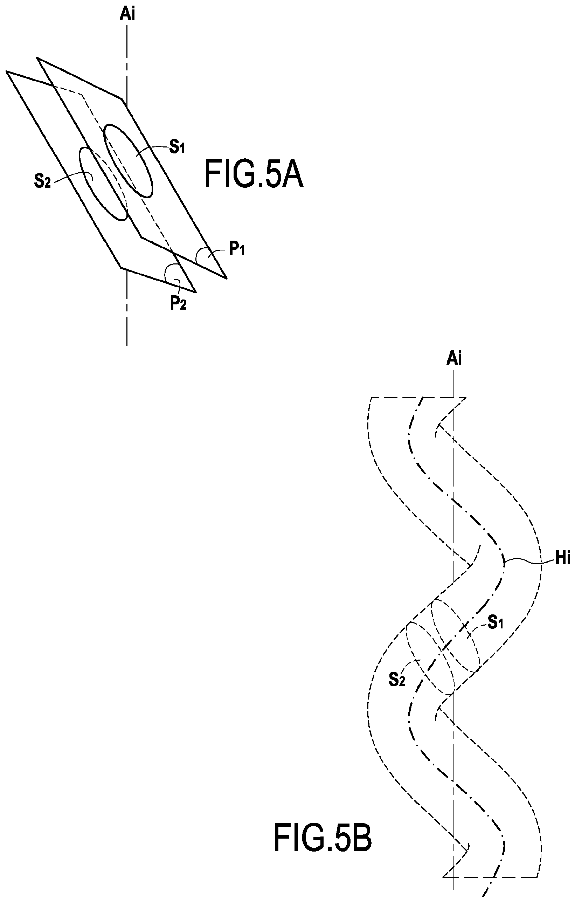

Les **Fig. 5A** et **5B** illustrent un cas intermédiaire plus général pour lequel une section circulaire **Si** contenue dans un plan présentant une inclinaison comprise entre 0° et 90° par rapport à l'axe de référence rectiligne **Ai** suit une trajectoire **Hi** hélicoïdale autour de l'axe de référence **Ai.** La rotation de la section circulaire **Si** autour de l'axe de référence rectiligne **Ai,** combinée à la translation de cette section circulaire **Si** selon l'axe de référence rectiligne **Ai** permet d'obtenir un canal flexueux dont la forme géométrique obtenue est connue sous le nom de « serpentin ». Il s'agit typiquement de la forme géométrique obtenue lorsqu'on enroule un tube autour d'un cylindre. Les **Fig. 5A** et **5B** montrent à titre d'illustration, uniquement deux sections circulaires **S1** et **S2** contenues chacune dans un plan **P1, P2** inclinés par rapport à l'axe de référence rectiligne **Ai.**

Le tableau 1 ci-dessous rappelle les particularités de ces trois exemples :

| Figures | **3A-3B** | **4A-4B** | **5A-5B** |
|---|---|---|---|
| Inclinaison du plan contenant la section génératrice **Si** par rapport à l'axe de référence **Ai** | inclinaison = 90° | inclinaison = 0° | 0°< **inclinaison** <90° |

D'une manière générale, le pas **p** ou la valeur de la rotation de la section génératrice **Si** autour de l'axe de référence **Ai** peut prendre différentes valeurs. Dans le cas d'une trajectoire **Hi** hélicoïdale, la valeur de la rotation de la section génératrice **Si** autour de l'axe de référence **Ai** est égale à un multiple de 2π radians (pour une hélice avec plusieurs tours) ou une fraction de 2π radians (pour une hélice selon moins d'un tour).

Tel que cela ressort des **Fig. 3A-3B****,** **4A-4B et 5A-5B****,** la trajectoire curviligne **Hi** présente pour ces trois exemples, une valeur de pas **p** constante. Bien entendu, la trajectoire curviligne **Hi** peut présenter une valeur de pas **p** variable car dépendante des valeurs de rotation et de translation.

La trajectoire curviligne **Hi** présente un pas **p** constant selon une partie ou toute la longueur du volume flexueux de circulation **Vi** ou un pas **p** variable selon une partie ou la totalité de la longueur du volume flexueux de circulation **Vi**.

Sur la **Fig. 2B****,** le tronçon **F2** illustre notamment le cas d'un pas **p** invariable tandis que le tronçon **F3** illustre notamment le cas d'un pas **p** variable.

Il est à noter que la **Fig. 2B** illustre différents autres paramètres intervenant dans la définition du canal flexueux conforme à l'invention. Ainsi, le tronçon **F4** illustre notamment le cas d'une alternance lévogyre - dextrogyre séparée par une portion **Tr** de canal droite et le tronçon **F5** illustre notamment le cas d'une section **Si** de morphologie variable alors que le tronçon **F1** illustre notamment le cas d'une distance **R** variable.

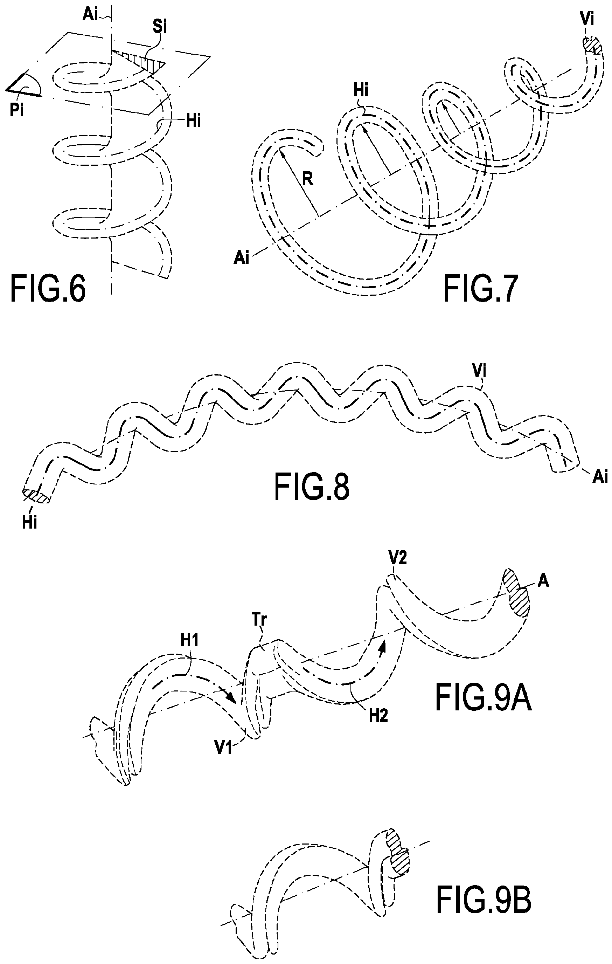

L'axe de référence **Ai** peut être écartée de la trajectoire curviligne **Hi** d'une distance **R** invariable **(****Fig. 3A-3B****,** **4A-4B, 5A-5B****)** sur la totalité ou une partie de la longueur du volume flexueux de circulation **Vi** ou d'une distance variable selon une partie ou la totalité de la longueur du volume flexueux de circulation **Vi** comme illustré à la **Fig. 7** où la distance **R** varie de manière régulière mais pourrait bien entendu évoluer de manière irrégulière. Selon cet exemple, le canal évolue selon une trajectoire hélico-spirale.

Il est rappelé que la distance **R** peut être telle que l'axe de référence **Ai** soit tangent à cette section génératrice **Si.** Si dans l'exemple illustré aux **Fig. 1A** à **1D****,** l'axe de référence **A1** est écarté de la section génératrice **S1,** il peut être envisagé comme illustré dans l'exemple de la **Fig. 6** que la section génératrice **S1** soit tangente à l'axe de référence **A1** qui est également l'axe de symétrie longitudinal du support poreux.

Il est à noter que la **Fig. 6** illustre le cas particulier pour lequel le plan contenant la section plane génératrice **Si** du volume (ici un triangle) est incliné de 90° par rapport à un axe de référence **Ai** tangent (ici à l'un des sommets du triangle) à ladite section plane génératrice triangulaire. Cette **Figure** illustre le cas pour lequel une section plane triangulaire **Si** contenue dans un plan **Pi** perpendiculaire à l'axe de référence rectiligne **Ai** suit une trajectoire **Hi** hélicoïdale autour de l'axe de référence **Ai** tangent à ladite section plane génératrice triangulaire. La rotation de la section triangulaire autour de l'axe de référence rectiligne **Ai** qu'elle touche ici en un point, combinée à la translation de cette section triangulaire **Si** selon l'axe de référence rectiligne **Ai** permet d'obtenir un canal flexueux dont la forme géométrique est connue sous le nom de « vis d'Archimède ». Il convient de noter qu'il est obtenu un canal flexueux dont la forme géométrique est aussi connue sous le nom de « vis d'Archimède » dans le cas particulier pour lequel le plan contenant la section plane génératrice du volume est parallèle à un axe de référence **Ai** tangent en un point ou en plusieurs points à ladite section plane génératrice et dans le cas plus général pour lequel le plan contenant la section plane génératrice du volume est incliné d'un angle quelconque par rapport à un axe de référence **Ai** tangent en un point à ladite section plane génératrice.

La trajectoire curviligne **Hi** est dite hélicoïdale lorsque simultanément le pas **p** et la distance **R** sont constants **(****Fig. 3B****,** **4B****,** **5B****).** Cette trajectoire curviligne **Hi** peut tourner autour de l'axe de référence **Ai** selon une partie ou toute la longueur du volume flexueux de circulation **Vi** dans le sens trigonométrique (dextrogyre) et/ou dans le sens opposé (lévogyre). Ainsi, la trajectoire curviligne **Hi** peut s'établir selon un unique même sens ou alternativement selon les deux sens opposés, sur des tronçons choisis de longueurs égales ou différentes.

Dans l'exemple illustré à la **Fig. 8****,** la section génératrice suit une trajectoire hélicoïdale **Hi** de sens dextrogyre avec un pas **p** invariable autour d'un axe de référence **Ai** curviligne.

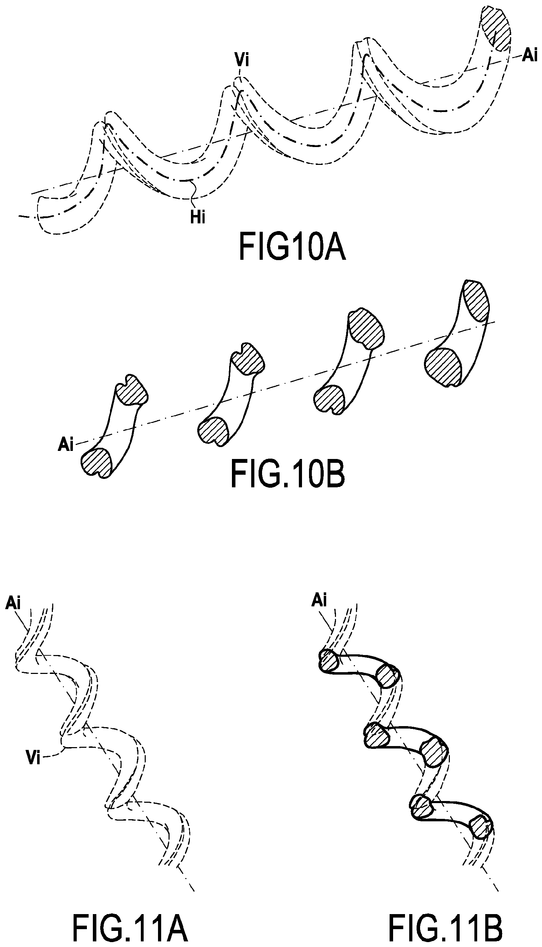

Dans l'exemple illustré aux **Fig. 9A-9B****,** la trajectoire **H1** de sens lévogyre est reliée à une trajectoire de sens dextrogyre **H2** par une trajectoire rectiligne **Tr** parallèle à l'axe de référence **Ai** tandis que dans l'exemple illustré aux **Fig. 10A-10B****,** la trajectoire **H1** de sens lévogyre est reliée directement à une trajectoire de sens lévogyre **H2.**

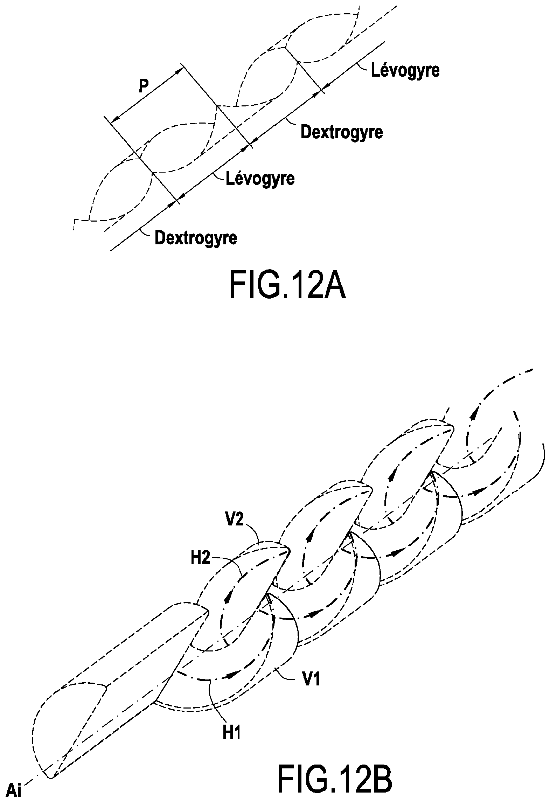

Avantageusement, la trajectoire curviligne **Hi** s'établit alternativement selon le sens dextrogyre et le sens lévogyre selon des tronçons par exemple de même longueur **(****Fig. 12A-12B****).**

La section génératrice **Si** de ce volume flexueux de circulation **Vi** peut présenter n'importe quel type de profils.

La morphologie ou la forme de la section génératrice **Si** peut être constante selon une partie ou toute la longueur du volume flexueux de circulation **Vi** ou varier selon une partie ou la totalité de la longueur du volume flexueux de circulation **Vi.** La morphologie de la section génératrice **Si** de ce volume de circulation peut ainsi à titre d'exemples non limitatifs être polygonale, circulaire, demi-circulaire ou oblongue. Les **Fig. 10A-10B** illustrent le cas pour lequel la morphologie de la section génératrice **Si** varie.

L'aire de la section génératrice **Si** peut posséder une aire invariable selon une partie ou toute la longueur du volume flexueux de circulation **Vi** ou une aire qui varie selon une partie ou la totalité de la longueur du volume flexueux de circulation **Vi.** Les **Fig. 11A-11B** illustrent le cas pour lequel l'aire de la section génératrice **Si** varie.

Les particularités des exemples de volumes flexueux illustrés aux **Figures** précédentes sont récapitulées dans le tableau 2 suivant :

| | | **3A 4A 5A** | **7** | **8** | **9A** | **10A** | **11A** | **12A** |
|---|---|---|---|---|---|---|---|---|
| Axe de référence **Ai** | rectiligne | X | X | | X | X | X | X |
| | curviligne | | | X | | | | |
| Morphologie de la section génératrice **Si** | invariable | X | X | X | X | | X | X |
| | variable | | | | | X | | |
| Aire de la section génératrice **Si** | invariable | X | X | X | X | X | | X |
| | variable | | | | | | X | |
| Distance **R** | invariable | X | | X | | X | X | X |
| | variable | | X | | X | | | |
| Pas **p** | invariable | X | X | X | X | X | X | X |
| | variable | | | | | | | |
| Trajectoire **Hi** hélicoïdale | | X | | X | X | X | X | X |
| Canal flexueux dextrogyre | | X | | X | X | X | X | X |
| Canal flexueux lévogyre | | | | | X | | | X |
| Tronçon de canal droit | | | | X | | | | |
| Inversion(s) du sens de rotation | | | | | X | | | X |

La suite de la description donne des exemples de réalisation préférés mais non limitatifs de supports poreux **2** comportant des canaux **4i** avec des volumes flexueux de circulation **Vi** conformes à l'invention.

Dans l'exemple illustré aux **Fig. 1A** à **1D****,** la section génératrice **S1** est une portion de disque et l'axe de référence **A1** est une droite confondue avec l'axe longitudinal de symétrie du support poreux. La trajectoire curviligne **H1** est hélicoïdale c'est-à-dire que la distance **R** entre la trajectoire curviligne **H1** et l'axe de référence **A1** est constante tout comme le pas **p** de l'hélice qui est constant. L'axe de référence **A1** ne traverse pas la section génératrice **S1** qui s'étend dans l'exemple illustré à distance de cet axe. Bien entendu, la section génératrice **S1** peut être tangente à l'axe de référence **A1.**

Le volume flexueux de circulation **V1** du canal **4₁** s'étend entre l'entrée **6** et la sortie **7** du canal, selon une partie seulement de la longueur du canal. Tel que cela ressort plus précisément de la **Fig. 1B****,** le volume flexueux de circulation **V1** du canal est aménagée selon une longueur **L** du support poreux **2** inférieure à la longueur totale de ce support poreux.

Selon une caractéristique avantageuse de réalisation, la section génératrice **S1,** prise sur une portion limitée à partir de l'entrée **6** et de la sortie **7,** évolue selon une trajectoire résultant d'un mouvement de translation parallèle à l'axe de référence **A1.** Le canal **4₁** comporte ainsi à partir de l'entrée **6** et de la sortie **7,** des volumes de circulation respectivement d'entrée **Ve** et de sortie **Vs** rectilignes parallèles à l'axe de référence **A1** et communiquant avec le volume flexueux de circulation **V1** du canal. Le canal **4₁** présente ainsi respectivement, entre son entrée **6** et sa sortie **7,** un volume d'entrée de circulation **Ve,** un volume flexueux de circulation **V1** et un volume de sortie de circulation **Vs.**

Dans l'exemple illustré aux **Fig. 13A** à **13E****,** le support poreux **2** est de forme tubulaire de section circulaire et comporte deux canaux **4₁** et **4₂.** Ces deux canaux présentent des sections génératrices **S1**, **S2** séparées entre elles par une cloison de séparation **11.** Ces sections génératrices **S1, S2** présentent des formes en portions de disques identiques avec des aires également identiques.

Chaque canal **4₁** et **4₂** présente un volume flexueux de circulation **V1, V2,** s'établissant selon une trajectoire curviligne **H1, H2** en hélice qui tourne autour d'un axe de référence **A1, A2.** Les trajectoires curvilignes **H1** et **H2** qui présentent des pas constants identiques sont parallèles entre elles. Les axes de référence **A1** et **A2** sont confondus selon une droite commune correspondant avantageusement à l'axe longitudinal de symétrie du support poreux. Chaque trajectoire curviligne **H1, H2** se trouve écartée de l'axe de référence **A1, A2** selon une même distance **R** constante de sorte que les canaux s'étendent de manière symétrique par rapport à l'axe de référence commun en s'imbriquant l'un dans l'autre.

Dans l'exemple illustré, aux **Fig. 13A** à **13E****,** les deux canaux possèdent des trajectoires parallèles mais il est clair qu'il peut être prévu une série de plusieurs canaux supérieurs à 2 dont les trajectoires sont parallèles voire non parallèle. Dans ce dernier cas, les canaux présentent bien entendu des sections génératrices écartées de l'axe de référence **Ai** d'une distance **R** adaptée pour être séparés entre eux par des cloisons de séparation **11.**

De manière analogue à l'exemple illustré aux **Fig. 1A** à **1D****,** le volume flexueux de circulation **V1, V2** des canaux s'étend entre l'entrée **6** et la sortie **7** du canal, selon une partie seulement de la longueur du canal. Ainsi, chaque canal **4₁** et **4₂** présente respectivement, entre son entrée **6** et sa sortie **7,** un volume d'entrée de circulation **Ve** de trajectoire rectiligne, le volume flexueux de circulation **V1, V2** et un volume de sortie de circulation **Vs** de trajectoire rectiligne, étant entendu que selon l'invention, il n'y a pas de sens de circulation et que l'entrée et la sortie peuvent indifféremment être permutées.

Selon l'exemple illustré aux **Fig. 13A** à **13E****,** le support poreux **2** comporte deux canaux **4₁** et **4₂** mais il est clair qu'il peut comporter un nombre supérieur de canaux disposés symétriquement ou non autour d'un axe de référence commun ou non, en étant séparés entre eux par des cloisons de séparation **11.**

Il est à noter que cette structure de canaux **4₁** et **4₂** imbriqués peut être dupliquée comme dans l'exemple illustré aux **Fig. 14A** et **14B****,** dans lequel le support poreux **2** comporte une série de sept structures à deux canaux **4₁** et **4₂** décrits aux **Fig. 13A** à **13E****.** Dans cet exemple illustré aux **Fig. 14A** et **14B****,** le support poreux **2** comporte ainsi quatorze canaux mais il clair qu'il peut être prévu de réaliser un support poreux avec un nombre différent de canaux.

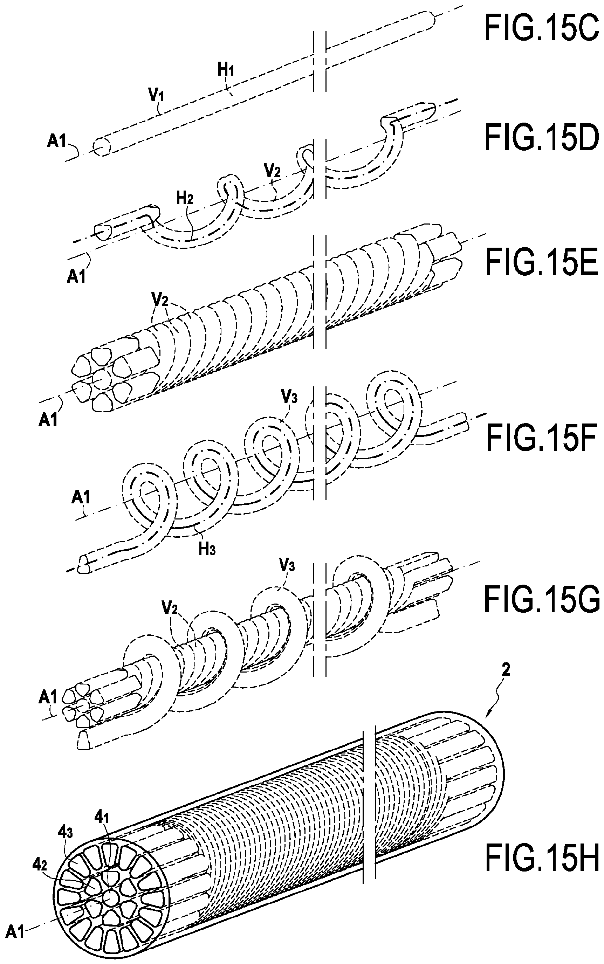

Selon l'exemple illustré aux **Fig. 15A** à **15H****,** le support poreux **2** comporte vingt-trois canaux **4** décomposés en trois catégories disposées concentriquement du centre à la périphérie du support poreux. Le support poreux **2** qui présente dans l'exemple, une forme tubulaire de section circulaire, comporte dans une première catégorie, un canal central **4₁** rectiligne centré sur l'axe longitudinal de symétrie **A1** du support poreux **2.** Ce canal central **4₁** comporte un volume de circulation **V1** qui ne présente pas le caractère flexueux conforme à l'invention **(****Fig. 15C****).**

Le support poreux **2** présente dans une deuxième catégorie dite intermédiaire, une série de six canaux **4₂** disposés selon une couronne centrée selon l'axe longitudinal de symétrie **A1** du support poreux **2.** Les canaux **4₂** présentent des sections génératrices **S2** de formes et d'aires identiques. Dans l'exemple, chaque section génératrice **S2** présente une forme générale non circulaire. Chaque canal **4₂** présente un volume flexueux de circulation **V2,** s'établissant selon une trajectoire curviligne **H2** en hélice de pas constant et de distance **R** constante, cette trajectoire curviligne **H2** tournant autour d'un axe de référence correspondant à l'axe longitudinal de symétrie **A1 (****Fig. 15D****).**

Chaque volume flexueux de circulation **V2** s'établit à distance autour du canal central **4₁.** Tel que cela ressort de la **Fig. 15E****,** les volumes flexueux de circulation **V2** de l'ensemble des canaux **4₂** de la catégorie intermédiaire, s'établissent selon des trajectoires curvilignes **H2** en hélice avec des pas identiques et des distances **R** identiques autour d'un axe de référence correspondant à l'axe longitudinal de symétrie **A1.** Les six canaux **4₂** s'étendent de manière symétrique par rapport à l'axe de référence commun **A1** en s'imbriquant les uns dans les autres.

De manière analogue à l'exemple illustré aux **Fig. 1A** à **1D****,** le volume flexueux de circulation **V2** des canaux s'étend entre l'entrée **6** et la sortie **7** du canal, selon une partie seulement de la longueur du canal. Ainsi, chaque canal **4₂** de la catégorie intermédiaire présente respectivement, entre son entrée **6** et sa sortie **7,** un volume d'entrée de circulation **Ve** de trajectoire rectiligne, le volume flexueux de circulation **V2** et un volume de sortie de circulation **Vs** de trajectoire rectiligne.

Le support poreux **2** présente dans une troisième catégorie dite périphérique, une série de seize canaux **4₃** disposés selon une couronne centrée selon l'axe longitudinal de symétrie **A1** du support poreux **2** et s'étendant concentriquement autour de la couronne des canaux **4₂** de la deuxième catégorie. Les canaux **4₃** de cette troisième catégorie présentent des sections génératrices **S3** de formes et d'aires identiques. Dans l'exemple, chaque section génératrice **S3** présente une forme générale de trapèze isocèle. Chaque canal **4₃** présente un volume flexueux de circulation **V3,** s'établissant selon une trajectoire hélicoïdale **H3,** cette trajectoire curviligne **H3** tournant autour d'un axe de référence correspondant à l'axe longitudinal de symétrie **A1 (****Fig. 15F****).** Chaque volume flexueux de circulation **V3** s'établit à distance autour des canaux **4₂** de la deuxième catégorie. Tel que cela ressort de la **Fig. 15G****,** les volumes flexueux de circulation **V3** des canaux **4₃** de la troisième catégorie s'établissent selon des trajectoires curvilignes **H3** en hélice avec des pas identiques et des rayons de giration identiques tournant autour d'un axe de référence correspondant à l'axe longitudinal de symétrie **A1.** Les seize canaux **4₃** s'étendent de manière symétrique par rapport à l'axe de référence commun **A1** en s'imbriquant les uns dans les autres.

De manière analogue à l'exemple illustré aux **Fig. 1A** à **1D****,** le volume flexueux de circulation **V3** des canaux s'étend entre l'entrée **6** et la sortie **7** du canal, selon une partie seulement de la longueur du canal. Ainsi, chaque canal **4₃** de la catégorie périphérique présente respectivement, entre son entrée **6** et sa sortie **7,** un volume d'entrée de circulation **Ve** de trajectoire rectiligne, le volume flexueux de circulation **V3** et un volume de sortie de circulation **Vs** de trajectoire rectiligne.

La **Fig. 15H** illustre un support poreux **2** dans lequel sont aménagés les canaux **4₁, 4₂** et **4₃** des trois catégories dont les volumes flexueux de circulation sont décrits par les **Fig. 15C** à **15G****.** Bien entendu, l'objet de l'invention peut être mis en œuvre pour un support poreux comportant des canaux réalisés en nombre différent répartis selon un nombre de catégories différentes.

Les simulations numériques de type CFD « Computational Fluid Dynamic » appliquées à l'exemple illustré aux **Fig. 13A** à **13E** ont donnés, en termes de performances et de consommations d'énergie comparés à des canaux droits de même diamètre hydraulique, les résultats suivants. Il s'agit des résultats des simulations faites à partir d'un modèle numérique établi sur la base de résultats de mesures expérimentales obtenus en faisant circuler comme fluide à traiter, un vin rouge dans un monocanal circulaire rectiligne, avec une pression transmembranaire de 1,5 bar et un seuil de coupure de 0,2 µm.

Dans le tableau 3 ci-après, le ratio **Qp/Qa** exprimé en % entre le débit volumique de perméat **Qp** (m³/h) et le débit volumique d'alimentation du fluide à traiter **Qa** (m³/h) rend compte de la performance intrinsèque des canaux flexueux par rapport aux canaux rectilignes de même diamètre hydraulique (Dh) pour une même pression transmembranaire (PTM) et un même seuil de coupure (µm).

L'efficience énergétique de l'unité de filtration au sein de laquelle les éléments de filtration comportent des canaux flexueux de ce type y est quant à elle exprimée en mètre cube de perméat extrait par kilojoule d'énergie nécessaire pour faire circuler le fluide à traiter dans les canaux (m³/KJ). La vitesse moyenne (m/s) dans les canaux correspondante est donnée dans ce tableau 3 à titre indicatif.

| | | | |
|---|---|---|---|
| Dh = 3mm - PTM = 1,5bar - seuil de coupure de la couche active = 0,2µm | Qp/Qa (%) | m³/KJ | m/s |
| Elément de filtration avec canaux rectilignes | 0,5 | 7,3.10⁻⁵ | 6,0 |
| Elément de filtration avec canaux flexueux selon l'invention conformes aux **Fig. 1A** à **1D** avec un pas de 24mm | 8,5 | 37.10⁻⁵ | 1,6 |
| Elément de filtration avec canaux flexueux selon l'invention conformes aux **Fig. 1A** à **1D** avec un pas de 12 mm | 13,13 | 59.10⁻⁵ | 0,9 |

Les résultats présentés dans ce tableau montrent, pour cet exemple de canaux flexueux hélicoïdaux illustré aux **Fig. 1A** à **1D****,** que, en comparaison avec un élément de filtration comportant des canaux rectilignes de même diamètre hydraulique :
- dans le cas où le pas de l'hélice vaut 24mm, la performance intrinsèque de l'élément de filtration est multipliée par 17 et son efficience énergétique est multipliée par 5 en comparaison avec un élément de filtration comportant des canaux rectilignes.
- dans le cas où le pas de l'hélice vaut 12mm, la performance intrinsèque de l'élément de filtration est multipliée par 26 et son efficience énergétique est multipliée par 8.

Selon une caractéristique avantageuse de l'invention, les canaux flexueux **4i** conformes à l'invention peuvent présenter un pas **p** de valeur indépendante de la valeur de la distance **R** entre la trajectoire curviligne **H1** et l'axe de référence **A1.** Ainsi, il est possible de réaliser des canaux flexueux avec un pas **p** de valeur faible combinée à une faible valeur de la distance **R.** Typiquement, il peut être prévu de réaliser des canaux flexueux présentant un pas **p** compris entre 1 mm et 250 mm avec une distance **R** comprise entre 0.1 mm et 100 mm. Par ailleurs, selon une caractéristique avantageuse, les canaux flexueux selon l'invention présentent des diamètres hydrauliques appartenant à la gamme allant de 0,5 mm à 20 mm. Il est rappelé que le diamètre hydraulique Dh est tel que Dh=4A/P où A est l'aire de la section de passage du canal et P est le périmètre mouillé de cette section.

Avantageusement, chaque canal possède un diamètre hydraulique pouvant être constant ou variable.

Dans le cadre de l'invention, la fabrication du support poreux **2,** voire de l'élément de séparation par flux tangentiel dans son entier, est réalisée grâce à une technique additive. Le procédé selon l'invention consiste à réaliser la structure tridimensionnelle du support par formation de strates élémentaires superposées et liées successivement entre elles de manière à faire croître progressivement la structure tridimensionnelle du support.

Le procédé a l'avantage, par rapport aux techniques antérieures, de réaliser le support en une seule étape de production ne nécessitant pas d'outillage, ni d'usinage, et donc de permettre l'accès à une plus grande gamme de géométries de support et permet de faire varier les formes et dimensions des obstacles dans les canaux.

Dans le cas de l'utilisation d'une matière solide telle qu'une poudre, l'épaisseur du lit de poudre et donc de chaque strate successivement consolidée est relativement faible pour permettre sa liaison à la strate inférieure, par application de l'apport d'énergie ou projection du liquide. En particulier, une épaisseur de 20 µm à 200 µm de poudre sera déposée, cette épaisseur étant fonction de la technique additive sélectionnée.

C'est la répétition de la séquence binaire qui permet, strate après strate, de construire la forme tridimensionnelle souhaitée. Le motif de consolidation peut varier d'une strate à l'autre. La croissance de la forme tridimensionnelle souhaitée est réalisée selon une direction de croissance choisie.

La granulométrie de la poudre déposée est un des facteurs qui détermine l'épaisseur minimum de chaque lit de poudre, ainsi que le diamètre moyen des pores final obtenu. En particulier, on utilisera une poudre de la matière destinée à constituer le support, par exemple une poudre d'oxyde métallique, voire une poudre de l'un de ses précurseurs. La poudre déposée présentera, par exemple, une taille moyenne de grains de l'ordre de 35 µm pour l'obtention d'un diamètre moyen de pores dans le support en céramique de l'ordre de 10 µm.

La demanderesse a constaté que le réglage de différents paramètres tels que le choix du matériau et, pour un matériau donné, la taille moyenne des grains de la poudre mise en oeuvre, et, pour un matériau et une granularité donnés, l'épaisseur du lit de poudre répété couche après couche d'une part et le réglage de différents paramètres propres à la technologie choisie pour la consolidation permet l'obtention et la maîtrise d'une texture poreuse résiduelle interconnectée au sein du monolithe consolidé. Cette texture poreuse résiduelle est le résultat d'un frittage ou d'un collage contrôlé des grains de poudre laissant des vides inter-granulaires interconnectés.

Dans le cas de l'utilisation d'un faisceau d'énergie, les principaux paramètres, sur lesquels il est possible d'agir, sont sa focalisation c'est-à-dire le diamètre du faisceau au niveau de l'impact avec le lit de poudre, la vitesse de balayage du lit de poudre par le faisceau de photons ou d'électrons ou encore le taux de recouvrement des surfaces d'impact du faisceau d'énergie lors de la constitution d'une strate.

Dans le cas de l'utilisation d'une projection de liquide, les principaux paramètres sur lesquels il est possible d'agir, sont le poids des gouttes, leur fréquence, la vitesse de balayage du lit de poudre par le « jet » de gouttes ou encore le taux de recouvrement lors de chaque passage.

La demanderesse a également constaté qu'il était possible, en modulant les différents paramètres précédemment décrits, d'ajuster la distribution en taille des pores et, pour chaque population de pores donnée, de maîtriser leur nombre et leur tortuosité.

Une fois la poudre agglomérée dans les zones sélectionnées, les grains de poudre matière non agglomérée est éliminée par toute technique appropriée, la fluidité initiale de la poudre utilisée facilitant cette opération. Il est possible d'utiliser des techniques de circulation d'air (aspiration) ou de circulation d'eau ou encore des vibrations pour se débarrasser des dernières traces de poudre restant dans les canaux flexueux ou en parois des formes réalisées.

La consolidation finale de l'élément filtrant et l'état final de la texture poreuse sont, le plus souvent, obtenus par un ou plusieurs post-traitements thermiques qui ont pour objectif l'élimination des liants (déliantage) et/ou le frittage du matériau proprement dit. La température choisie pour un tel frittage final sera fonction de la nature du matériau inorganique utilisé et de la taille moyenne des grains de la poudre utilisée.

Le support, voire l'élément de séparation par flux tangentiel dans son entier, est ainsi réalisé strate après strate. Pour cela, en amont, grâce à un logiciel de conception par ordinateur, la structure tridimensionnelle du support ou de l'élément de séparation par flux tangentiel à réaliser, est découpée en tranches. L'objet virtuel en trois dimensions à réaliser est ainsi découpé en tranches bidimensionnelles de très fines épaisseurs. Ces fines tranches vont alors être réalisées une à une, sous forme de strates élémentaires superposées et liées entre elles, de manière à faire croître progressivement la forme tridimensionnelle souhaitée.

Cette structure tridimensionnelle est réalisée :
- soit par la répétition des étapes suivantes :
   - réalisation d'un lit d'une matière solide (poudre organique ou inorganique) ou liquide (précurseur organique ou liquide dans lequel est dispersée une poudre qui peut être organique ou inorganique) destinée à former le support poreux, le lit étant d'épaisseur constante selon une surface supérieure à la section dudit support poreux prise au niveau de la strate ;
   - consolidation localisée selon un motif déterminé pour chaque strate, d'une partie de matière réalisée pour créer la strate élémentaire, et liaison simultanée de la strate élémentaire ainsi formée à la strate précédente ;
- soit par la création successive de cordons de matière formés suite à la fusion d'une poudre organique ou inorganique projetée dans le faisceau d'un laser selon le motif prédéterminé pour chaque strate ;
- soit par fusion continue ou discontinue (goutte) d'un fil d'un précurseur solide thermofusible. Quand le précurseur est un polymère organique thermofusible utilisé seul le support est de nature organique et immédiatement utilisable pour le dépôt d'une couche de nature organique. Quand le précurseur est un mélange d'un polymère organique thermofusible et d'une poudre inorganique céramique ou métallique, le support est, après élimination du polymère servant de liant et après frittage des grains de la poudre inorganique, de nature inorganique.

D'une manière générale dans le premier cas la matière utilisée est soit solide ou liquide et la consolidation des strates élémentaires est réalisée par un apport d'énergie ou par projection d'un liquide en fines gouttelettes. L'apport localisé d'énergie peut se faire avec un faisceau de lumière dirigé (LED ou LASER) ou un faisceau d'électrons dirigés, ou encore avec toute source d'énergie autorisant sa focalisation et un balayage du lit de poudre selon le motif sélectionné par CAO. L'interaction énergie-matière conduit alors, soit à un frittage, soit à une fusion/solidification de la matière, soit encore à une photo-polymérisation ou photo-réticulation de la matière, selon sa nature et celle de la source d'énergie utilisée.

L'apport localisé de liquide sur un lit de poudre peut se faire avec des microgouttelettes créées à l'aide d'un système piézo-électrique, éventuellement chargées et dirigées dans un champ électrostatique. Le liquide est alors un liant ou un agent activateur du liant préalablement ajouté à la poudre céramique.

L'utilisation d'une technique additive envisagée dans le cadre de l'invention permet d'obtenir, par rapport aux techniques antérieures, d'une part, un gain en termes de fiabilité et cadence de production, et d'autre part une grande variabilité quant au choix des formes du support et des formes et reliefs qui peuvent être conformés dans le ou les canaux à l'intérieur du support.

Dans le cadre de l'invention, pour la conception de la forme tridimensionnelle, différentes techniques additives peuvent être utilisées, comme par exemple, la SLS (de l'anglais Selective Laser Sintering) ou SLM (de l'anglais Selective Laser Melting), l'impression 3D ou Binder-Jetting, la LCM (Lithography-based Ceramic Manufacturing), le FDM (Fused Deposition Modeling), la Stéréolithographie (Stereolithography Apparatus SLA).

Dans le cadre de l'invention, on vise des éléments de séparation d'un milieu fluide par filtration tangentielle, communément appelés membranes de filtration. De tels éléments de séparation comportent un support poreux réalisé en un matériau organique ou inorganique.

Pour un support poreux organique, il peut être prévu de choisir à titre d'exemples non limitatifs, parmi les matériaux organiques suivants : Polyamide, polyéthercétonecétone, polystyrène, Alumide, polyphénylsulfone, Elastomères fluorés thermoplastiques, Polypropylène, Polyéthylène, Epoxy, Acrylate, Acrylonitrile butadiène styrène, Polyméthacrylate de méthyle, Polycarbonate, Nylon, polyétherimide, Acrylonitrile styrène acrylate, acide polylactique, Polychlorure de vinyle et leurs mélanges.

Pour un support poreux inorganique non métallique (céramique), il peut être prévu de choisir à titre d'exemples non limitatifs, parmi les matériaux inorganiques suivants : Oxyde d'aluminium, Oxyde de titane, Oxyde de zirconium, Titanate d'aluminium, Nitrure d'aluminium, Nitrure de titane, Nitrure de bore, Nitrure de silicium, Sialon, Carbone graphite, Carbure de silicium, Carbure de tungstène et leurs mélanges.

Pour un support poreux inorganique métallique (Métaux et alliages), il peut être prévu de choisir à titre d'exemples non limitatifs, parmi les matériaux métalliques suivants : Aluminium, Alliages d'aluminium, Alliages de cobalt et de chrome, Alliages de nickel, Alliages de nickel et de chrome, Aciers et aciers inoxydables, Titane, Alliages de titane, Alliages de cuivre et d'étain, Alliages de cuivre, d'étain et d'aluminium, Alliages de cuivre et de zinc et leurs mélanges.

## Revendications

1. Elément de séparation par flux tangentiel d'un milieu fluide à traiter en un filtrat et un rétentat, ledit élément de séparation comportant un support poreux rigide monobloc **(2)** à l'intérieur du volume duquel au moins un canal **(4i)** pour la circulation du milieu fluide à traiter est aménagé entre une entrée **(6)** pour le milieu fluide à traiter et une sortie **(7)** pour le rétentat, ce support poreux rigide monobloc comportant une surface extérieure **(3)** de récupération du filtrat ayant traversé ledit support, **caractérisé en ce qu'**au moins un canal **(4i)** présente entre l'entrée et la sortie, un volume flexueux de circulation **(Vi)** défini par le déplacement autour d'un axe de référence (**Ai**) selon une trajectoire curviligne **(Hi),** d'une section plane génératrice (**Si**) et **en ce que** cet axe de référence **(Ai)** ne traverse pas ladite section génératrice **(Si)** et se trouve contenu dans le volume du support poreux.

2. Elément de séparation par flux tangentiel selon la revendication 1, **caractérisé en ce que** le volume flexueux de circulation **(Vi)** d'au moins un canal (**4i**) est défini sur une partie seulement de sa longueur prise entre l'entrée et la sortie ou sur toute sa longueur de son entrée à sa sortie.

3. Elément de séparation par flux tangentiel selon la revendication 1 ou 2, **caractérisé en ce que** le support poreux rigide monobloc **(2)** comporte plusieurs canaux (**4i**) de circulation pour le milieu fluide aménagés à l'intérieur dudit support.

4. Elément de séparation par flux tangentiel selon l'une des revendications 1 à 3, **caractérisé en ce qu'**au moins un canal **(4)** présente une section génératrice **(Si)** avec une aire constante ou variable.

5. Elément de séparation par flux tangentiel selon l'une des revendications 1 à 4, **caractérisé en ce qu'**au moins un canal (**4i**) présente une section génératrice (**Si**) avec une forme constante ou variable.

6. Elément de séparation par flux tangentiel selon l'une des revendications 1 à 5, **caractérisé en ce que** la section génératrice d'au moins un canal **(4i)** est écartée de l'axe de référence (**Ai**) d'une distance constante.

7. Elément de séparation par flux tangentiel selon la revendication 6, **caractérisé en ce que** la section génératrice d'au moins un canal (**4i**) est écartée de l'axe de référence (**Ai**) d'une distance variable.

8. Elément de séparation par flux tangentiel selon l'une des revendications 1 à 5, **caractérisé en ce que** l'axe de référence **(Ai)** est tangent à la section génératrice d'au moins un canal (**4i**).

9. Elément de séparation par flux tangentiel selon l'une des revendications précédentes, **caractérisé en ce qu'**il comporte au moins une série de plusieurs canaux présentant des sections génératrices écartées de l'axe de référence **(Ai)** d'une distance **R** adaptée pour être séparés entre eux par des cloisons de séparation **(11).**

10. Elément de séparation par flux tangentiel selon l'une des revendications 1 à 9, **caractérisé en ce que** la section génératrice **(Si)** d'au moins un canal **(4i)** évolue selon une trajectoire résultant d'un mouvement de translation de direction constante ou variable combiné sur au moins une portion prise entre l'entrée et la sortie, à un mouvement de rotation autour de l'axe de référence (**Ai**) selon un pas **(p)** constant ou variable et selon un sens lévogyre ou dextrogyre.

11. Elément de séparation par flux tangentiel selon la revendication 10, **caractérisé en ce que** la trajectoire présente un pas **p** compris entre 0.1 mm et 250 mm et **en ce que** la distance **(R)** entre la trajectoire curviligne (**H1**) et l'axe de référence (**A1**) est compris entre 0.1 mm et 100 mm.

12. Elément de séparation par flux tangentiel selon l'une des revendications 1 à 11, **caractérisé en ce que** la section génératrice **(Si)** d'au moins un canal (**4i**) prise sur au moins une portion entre l'entrée et la sortie, évolue selon une trajectoire hélicoïdale **(Hi).**

13. Elément de séparation par flux tangentiel selon l'une des revendications 1 à 12, **caractérisé en ce que** la section génératrice (**Si**) d'au moins un canal (**4i**), prise sur une portion limitée à partir de l'entrée **(6)** et de la sortie **(7),** évolue selon une trajectoire (**Hi**) résultant d'un mouvement de translation parallèle à l'axe de référence.

14. Elément de séparation par flux tangentiel selon l'une des revendications 1 à 13, **caractérisé en ce qu'**au moins un canal (**4i**) présente une section génératrice (**Si**), s'étendant perpendiculairement ou parallèlement à l'axe de référence.

15. Elément de séparation par flux tangentiel selon l'une des revendications 1 à 14, **caractérisé en ce que** le support poreux **(2)** est réalisé en un matériau choisi parmi les matériaux organiques tels que Polyamide, polyéthercétonecétone, polystyrène, Alumide, polyphénylsulfone, Elastomères fluorés thermoplastiques, Polypropylène, Polyéthylène, Epoxy, Acrylate, Acrylonitrile butadiène styrène, Polyméthacrylate de méthyle, Polycarbonate, Nylon, polyétherimide, Acrylonitrile styrène acrylate, acide polylactique, Polychlorure de vinyle et leurs mélanges, choisi parmi les matériaux inorganiques suivants tels que Oxyde d'aluminium, Oxyde de titane, Oxyde de zirconium, Titanate d'aluminium, Nitrure d'aluminium, Nitrure de titane, Nitrure de bore, Nitrure de silicium, Sialon, Carbone graphite, Carbure de silicium, Carbure de tungstène et leurs mélanges, choisi parmi les matériaux métalliques suivants tels que Aluminium, Alliages d'aluminium, Alliages de cobalt et de chrome, Alliages de nickel, Alliages de nickel et de chrome, Aciers et aciers inoxydables, Titane, Alliages de titane, Alliages de cuivre et d'étain, Alliages de cuivre, d'étain et d'aluminium, Alliages de cuivre et de zinc et leurs mélanges.

16. Elément de séparation par flux tangentiel selon l'une des revendications 1 à 15, **caractérisé en ce qu'**il comporte un support poreux (2) et au moins une couche séparatrice continûment déposée sur la paroi interne de chaque canal **(4i)** chacune constituées d'une céramique, choisie parmi les oxydes, les nitrures, les carbures ou d'autres matériaux céramiques et leur mélanges, et, en particulier, d'oxyde de titane, d'alumine, de zircone ou d'un de leur mélange, de nitrure de titane, de nitrure d'aluminium, de nitrure de bore, de carbure de silicium éventuellement en mélange avec un autre matériau céramique.

17. Elément de séparation par flux tangentiel selon l'une des revendications précédentes, **caractérisé en ce que** les canaux (**4i**) présentent des diamètres hydrauliques appartenant à la gamme allant de 0,5 mm à 20 mm.

18. Elément de séparation par flux tangentiel selon l'une des revendications précédentes, **caractérisé en ce que** chaque canal (**4i**) présente un diamètre hydraulique constant ou variable.

19. Elément de séparation par flux tangentiel selon l'une des revendications précédentes, **caractérisé en ce que** le support (2) présente un diamètre moyen de pores appartenant à la gamme allant de 4 µm à 100 µm.

20. Elément de séparation par flux tangentiel selon la revendication 19, **caractérisé en ce que** le diamètre moyen de pores correspond à la valeur d50 de la distribution volumique, pour laquelle 50% du volume total des pores correspondent au volume des pores de diamètre inférieur à ce d50 ; la distribution volumique étant obtenue par pénétration de mercure, par exemple selon la technique décrite dans la norme ISO 15901-1 :2005.

21. Procédé de fabrication d'un élément de séparation par flux tangentiel selon l'une des revendications précédentes, dans lequel le support est réalisé par formation de strates élémentaires superposées et liées successivement entre elles, de manière à faire croître progressivement la forme tridimensionnelle du support dans lequel est aménagé au moins un canal flexueux **(4i)** conforme à l'une des revendications 1 à 20.

22. Procédé selon la revendication 21, **caractérisé en ce qu'**il consiste à réaliser le support par technique additive pour laquelle grâce à un logiciel de conception par ordinateur, la forme du support est découpée en tranches, ces tranches étant réalisées une à une, sous la forme de strates élémentaires superposées et liées successivement entre elles, par la répétition des deux étapes suivantes : dépôt d'un lit continu, homogène et d'épaisseur constante d'une matière en poudre destinée à former le support, le lit couvrant une surface supérieure à la section dudit corps poreux à former, prise au niveau de la strate; consolidation localisée selon un motif déterminé pour chaque strate, d'une partie de la matière déposée pour créer la strate élémentaire, ces deux étapes étant répétées de manière à permettre à chaque répétition, la liaison simultanée de la strate élémentaire ainsi formée à la strate précédemment formée, de manière à faire croître progressivement la forme du support.

## Patentansprüche

1. Element zur Trennung mittels Tangentialströmung eines zu behandelnden Fluidmediums in ein Filtrat und ein Retentat, wobei das Trennelement einen porösen, starren, einstückigen Träger (2) beinhaltet, in dessen Volumen zumindest ein Kanal (4i) für die Zirkulation des zu behandelnden Fluidmediums zwischen einem Eingang (6) für das zu behandelnde Fluidmedium und einem Ausgang (7) für das Retentat vorgesehen ist, wobei dieser poröse, starre, einstückige Träger eine äußere Oberfläche (3) zur Wiedergewinnung des Filtrats, das den Träger durchquert hat, beinhaltet, **dadurch gekennzeichnet, dass** zumindest ein Kanal (4i) zwischen dem Eingang und dem Ausgang ein gewundenes Volumen zur Zirkulation (Vi), das durch die Bewegung um eine Referenzachse (Ai) gemäß einer kurvenförmigen Bahn (Hi) definiert wird, mit einem flachen erzeugenden Querschnitt (Si) aufweist, und dass diese Referenzachse (Ai) den erzeugenden Querschnitt (Si) nicht durchquert und sich in dem Volumen des porösen Trägers befindet.

2. Element zur Trennung mittels Tangentialströmung nach Anspruch 1, **dadurch gekennzeichnet, dass** das gewundene Volumen zur Zirkulation (Vi) zumindest eines Kanals (4i) nur über einen Teil seiner Länge, die von seinem Eingang bis zu seinem Ausgang genommen wird, oder über seine gesamte Länge von seinem Eingang bis zu seinem Ausgang definiert ist.

3. Element zur Trennung mittels Tangentialströmung nach Anspruch 1 oder 2, **dadurch gekennzeichnet, dass** der poröse, starre, einstückige Träger (2) mehrere Kanäle (4i) zur Zirkulation für das Fluidmedium beinhaltet, die innerhalb des Trägers vorgesehen sind.

4. Element zur Trennung mittels Tangentialströmung nach einem der Ansprüche 1 bis 3, **dadurch gekennzeichnet, dass** zumindest ein Kanal (4) einen erzeugenden Querschnitt (Si) mit einer konstanten oder variablen Fläche aufweist.

5. Element zur Trennung mittels Tangentialströmung nach einem der Ansprüche 1 bis 4, **dadurch gekennzeichnet, dass** zumindest ein Kanal (4i) einen erzeugenden Querschnitt (Si) mit einer konstanten oder variablen Form aufweist.

6. Element zur Trennung mittels Tangentialströmung nach einem der Ansprüche 1 bis 5, **dadurch gekennzeichnet, dass** der erzeugende Querschnitt zumindest eines Kanals (4i) von der Referenzachse (Ai) in einem konstanten Abstand beabstandet ist.

7. Element zur Trennung mittels Tangentialströmung nach Anspruch 6, **dadurch gekennzeichnet, dass** der erzeugende Querschnitt zumindest eines Kanals (4i) von der Referenzachse (Ai) in einem variablen Abstand beabstandet ist.

8. Element zur Trennung mittels Tangentialströmung nach einem der Ansprüche 1 bis 5, **dadurch gekennzeichnet, dass** die Referenzachse (Ai) tangential zu dem erzeugenden Querschnitt zumindest eines Kanals (4i) steht.

9. Element zur Trennung mittels Tangentialströmung nach einem der vorhergehenden Ansprüche, **dadurch gekennzeichnet, dass** es zumindest eine Reihe von mehreren Kanälen beinhaltet, die erzeugende Querschnitte aufweisen, die von der Referenzachse (Ai) in einem Abstand R beabstandet sind, der dazu geeignet ist, dazwischen durch Trennwände (11) getrennt zu werden.

10. Element zur Trennung mittels Tangentialströmung nach einem der Ansprüche 1 bis 9, **dadurch gekennzeichnet, dass** der erzeugende Querschnitt (Si) zumindest eines Kanals (4i) sich gemäß einer Bahn entwickelt, die aus einer Translationsbewegung mit konstanter oder variabler Richtung über zumindest einen Abschnitt, der zwischen dem Eingang und dem Ausgang genommen wird, kombiniert mit einer Drehbewegung um die Referenzachse (Ai) gemäß einer konstanten oder variablen Teilung (P) und gemäß einem linksdrehenden oder rechtsdrehenden Sinn resultiert.

11. Element zur Trennung mittels Tangentialströmung nach Anspruch 10, **dadurch gekennzeichnet, dass** die Bahn eine Teilung p zwischen 0,1 mm und 250 mm aufweist, und dass der Abstand (R) zwischen der kurvenförmigen Bahn (H1) und der Referenzachse (A1) zwischen 0,1 mm und 100 mm liegt.

12. Element zur Trennung mittels Tangentialströmung nach einem der Ansprüche 1 bis 11, **dadurch gekennzeichnet, dass** der erzeugende Querschnitt (Si) zumindest eines Kanals (4i), über zumindest einen Abschnitt zwischen dem Eingang und dem Ausgang genommen, sich gemäß einer spiralförmigen Bahn (Hi) entwickelt.

13. Element zur Trennung mittels Tangentialströmung nach einem der Ansprüche 1 bis 12, **dadurch gekennzeichnet, dass** der erzeugende Querschnitt (Si) zumindest eines Kanals (4i), über einen begrenzten Abschnitt ausgehend von dem Eingang (6) und von dem Ausgang (7) genommen, sich gemäß einer Bahn (Hi) entwickelt, die aus einer Translationsbewegung parallel zu der Referenzachse resultiert.

14. Element zur Trennung mittels Tangentialströmung nach einem der Ansprüche 1 bis 13, **dadurch gekennzeichnet, dass** zumindest ein Kanal (4i) einen erzeugenden Querschnitt (Si) aufweist, der sich senkrecht auf die oder parallel zu der Referenzachse erstreckt.

15. Element zur Trennung mittels Tangentialströmung nach einem der Ansprüche 1 bis 14, **dadurch gekennzeichnet, dass** der poröse Träger (2) aus einem Material verwirklicht ist, der ausgewählt ist aus den organischen Materialien wie Polyamid, Polyetherketonketon, Polystyrol, Alumid, Polyphenylsulfon, thermoplastischen Fluorelastomeren, Polypropylen, Polyethylen, Epoxy, Acrylat, Acrylonitrilbutadienstyrol, Polymethylmethacrylat, Polycarbonat, Nylon, Polyetherimid, Acrylonitrilstyrolacrylat, Polymilchsäure, Polyvinylchlorid und deren Mischungen, ausgewählt aus den folgenden anorganischen Materialien wie Aluminiumoxid, Titanoxid, Zirkoniumoxid, Aluminiumtitanat, Aluminiumnitrid, Titannitrid, Bornitrid, Siliziumnitrid, Sialon, Kohlenstoff-Graphit, Siliziumkarbid, Wolframkarbid und deren Mischungen, ausgewählt aus den folgenden Metallmaterialien wie Aluminium, Aluminiumlegierungen, Legierungen von Kobalt und Chrom, Nickellegierungen, Legierungen von Nickel und Chrom, Stählen und rostfreien Stählen, Titan, Titanlegierungen, Legierungen von Kupfer und Zinn, Legierungen von Kupfer, Zinn und Aluminium, Legierungen von Kupfer und Zink und deren Mischungen.

16. Element zur Trennung mittels Tangentialströmung nach einem der Ansprüche 1 bis 15, **dadurch gekennzeichnet, dass** es einen porösen Träger (2) und zumindest eine Trennschicht, die durchgehend auf der Innenwand eines jeden Kanals (4i) abgeschieden ist, beinhaltet, wobei jede davon aus einer Keramik gebildet wird, die aus den Oxiden, Nitriden, Karbiden oder anderen keramischen Materialien und deren Mischungen ausgewählt ist, und insbesondere aus Titanoxid, Aluminiumoxid, Zirkonoxid oder einer ihrer Mischungen, aus Titannitrid, aus Aluminiumnitrid, aus Bornitrid, aus Siliziumkarbid, eventuell in Mischung mit einem weiteren keramischen Material.

17. Element zur Trennung mittels Tangentialströmung nach einem der vorhergehenden Ansprüche, **dadurch gekennzeichnet, dass** die Kanäle (4i) hydraulische Durchmesser aufweisen, die in den Bereich von 0,5 mm bis 20 mm fallen.

18. Element zur Trennung mittels Tangentialströmung nach einem der vorhergehenden Ansprüche, **dadurch gekennzeichnet, dass** jeder Kanal (4i) einen konstanten oder variablen hydraulischen Durchmesser aufweist.

19. Element zur Trennung mittels Tangentialströmung nach einem der vorhergehenden Ansprüche, **dadurch gekennzeichnet, dass** der Träger (2) einen mittleren Porendurchmesser aufweist, der in den Bereich von 4 µm bis 100 µm fällt.

20. Element zur Trennung mittels Tangentialströmung nach Anspruch 19, **dadurch gekennzeichnet, dass** der mittlere Porendurchmesser dem Wert d50 der Volumenverteilung entspricht, für welchen 50 % des Gesamtvolumens der Poren dem Volumen der Poren mit einem Durchmesser unter diesem d50 entsprechen, wobei die Volumenverteilung durch Quecksilber-Intrusion erhalten wird, zum Beispiel gemäß der in der Norm ISO 15901-1:2005 beschriebenen Technik.

21. Verfahren zur Herstellung eines Elements zur Trennung mittels Tangentialströmung nach einem der vorhergehenden Ansprüche, wobei der Träger durch Bildung von elementaren Schichten, die übereinander gelagert und der Reihe nach miteinander verbunden werden, verwirklicht wird, auf eine Weise, um die dreidimensionale Form des Trägers, in welchem zumindest ein gewundener Kanal (4i) nach einem der Ansprüche 1 bis 20 vorgesehen ist, progressiv wachsen zu lassen.

22. Verfahren nach Anspruch 21, **dadurch gekennzeichnet, dass** es darin besteht, den Träger durch eine additive Technik zu verwirklichen, für welche mittels einer CAD-Software die Form des Trägers in Schnitte zerlegt wird, wobei diese Schnitte einzeln in Form von elementaren Schichten, die übereinander gelagert und der Reihe nach miteinander verbunden werden, verwirklicht werden, durch die Wiederholung der folgenden zwei Schritte: Abscheidung eines durchgehenden, homogenen Betts konstanter Dicke aus einem Material in Pulverform, das dazu bestimmt ist, den Träger zu bilden, wobei das Bett eine obere Oberfläche auf dem Querschnitt des zu bildenden porösen Körpers, auf Höhe der Schicht genommen, bedeckt, lokalisierte Verfestigung, gemäß einem bestimmten Muster für jede Schicht, eines Teils des abgeschiedenen Materials, um die elementare Schicht zu bilden, wobei diese zwei Schritte auf solche Weise wiederholt werden, dass bei jeder Wiederholung die gleichzeitige Verbindung der so gebildeten elementaren Schicht mit der zuvor gebildeten Schicht erlaubt wird, auf eine Weise, um die Form des Trägers progressiv wachsen zu lassen.

## Claims

1. A cross-flow separation element for separating a fluid medium for treatment into a filtrate and a retentate, said separation element comprising a single-piece rigid porous support (2) having arranged inside its volume at least one channel (4i) for passing a flow of the fluid medium for treatment between an inlet (6) for the fluid medium for treatment and an outlet (7) for the retentate, the single-piece rigid porous support having an outside surface (3) for recovering the filtrate that has passed through said support, **characterized in that** at least one channel (4i) presents, between the inlet and the outlet, a flexuous flow volume (Vi) defined by sweeping a generator plane section (Si) along a curvilinear path (Hi) around a reference axis (Ai), and **in that** the reference axis (Ai) does not intersect said generator section (Si) and is contained within the volume of the porous support.

2. A cross-flow separation element according to claim 1, **characterized in that** the flexuous flow volume (Vi) of at least one channel (4i) is defined over a fraction only of its length between the inlet and the outlet or over its entire length from its inlet to its outlet.

3. A cross-flow separation element according to claim 1 or claim 2, **characterized in that** the single-piece rigid porous support (2) has a plurality of channels (4i) for the flow of fluid medium arranged inside said support.

4. A cross-flow separation element according to any one of claims 1 to 3, **characterized in that** at least one channel (4) presents a generator section (Si) of area that is constant or variable.

5. A cross-flow separation element according to any one of claims 1 to 4, **characterized in that** at least one channel (4i) presents a generator section (Si) of shape that is constant or variable.

6. A cross-flow separation element according to any one of claims 1 to 5, **characterized in that** the generator section of at least one channel (4i) is spaced apart from the reference axis (Ai) by a distance that is constant.

7. A cross-flow separation element according to claim 6, **characterized in that** the generator section of at least one channel (4i) is spaced apart from the reference axis (Ai) by at distance that is variable.

8. A cross-flow separation element according to any one of claims 1 to 5, **characterized in that** the reference axis (Ai) is tangential to the generator section of at least one channel (4i).

9. A cross-flow separation element according to any preceding claim, **characterized in that** it includes at least one series of a plurality of channels presenting generator sections that are spaced apart from the reference axis (Ai) by a distance R adapted to ensure they are separated from one another by separating partitions (11).

10. A cross-flow separation element according to any one of claims 1 to 9, **characterized in that** the generator section (Si) of at least one channel (4i) follows a path that results from a movement in translation of constant or variable direction combined over at least a fraction taken between the inlet and the outlet with a movement in rotation about the reference axis (Ai) at a pitch (p) that is constant or variable and in a left-handed or right-handed direction.

11. A cross-flow separation element according to claim 10, **characterized in that** the path presents a pitch p lying in the range 0.1 mm to 250 mm, and **in that** the distance (R) between the curvilinear path (H1) and the reference axis (A1) lies in the range 0.1 mm to 100 mm.

12. A cross-flow separation element according to any one of claims 1 to 11, **characterized in that** the generator section (Si) of at least one channel (4i) taken over at least a fraction between the inlet and the outlet follows a path that is helical (Hi).

13. A cross-flow separation element according to any one of claims 1 to 12, **characterized in that** the generator section (Si) of at least one channel (4i), taken over a limited fraction from the inlet (6) and the outlet (7) follows a path (Hi) that results from movement in translation parallel to the reference axis.

14. A cross-flow separation element according to any one of claims 1 to 13, **characterized in that** at least one channel (4i) presents a generator section (Si) extending perpendicularly to the reference axis or parallel thereto.

15. A cross-flow separation element according to any one of claims 1 to 14, **characterized in that** the porous support (2) is made of a material selected from organic materials such as polyamide, polyetherketoneketone, polystyrene, alumide, polyphenylsulfone, fluorinated thermoplastic elastomers, polypropylene, polyethylene, epoxy, acrylate, acrylonitrile butadiene styrene, polymethyl methacrylate, polycarbonate, nylon, polyetherimide, acrylonitrile styrene acrylate, polylactic acid, polyvinyl chloride, and mixtures thereof, selected from the following inorganic materials such as aluminum oxide, titanium oxide, zirconium oxide, aluminum titanate, aluminum nitride, titanium nitride, boron nitride, silicon nitride, sialon, graphite carbon, silicon carbide, tungsten carbide, and mixtures thereof, selected from the following metallic materials such as aluminum, alloys of aluminum, alloys of cobalt and chromium, alloys of nickel, alloys of nickel and chromium, steels and stainless steels, titanium, alloys of titanium, alloys of copper and tin, alloys of copper, tin, and aluminum, alloys of copper and zinc, and mixtures thereof.

16. A cross-flow separation element according to any one of claims 1 to 15, **characterized in that** it comprises a porous support (2) and at least one separator layer continuously deposited on the inside wall of each channel (4i), each separator layer being made of a ceramic selected from oxides, nitrides, carbides, and other ceramic materials and mixtures thereof, and in particular titanium oxide, alumina, zirconia, or a mixture thereof, titanium nitride, aluminum nitride, boron nitride, silicon carbide, optionally mixed with another ceramic material.

17. A cross-flow separation element according to any preceding claim, **characterized in that** the channels (4i) present hydraulic diameters lying in the range 0.5 mm to 20 mm.

18. A cross-flow separation element according to any preceding claim, **characterized in that** each channel (4i) presents a hydraulic diameter that is constant or variable.

19. A cross-flow separation element according to any preceding claim, **characterized in that** the support (2) presents a mean pore diameter lying in the range 4 µm to 100 pm.

20. A cross-flow separation element according to claim 19, **characterized in that** the mean pore diameter corresponds to the d50 value of the volume distribution at which 50% of the total volume of the pores correspond to the volume of pores of diameter less than the d50 value, the volume distribution being obtained by mercury penetration, e.g. using the technique described in ISO standard 15901-1: 2005.

21. A method of fabricating a cross-flow separation element according to any preceding claim, wherein the support is made by forming superposed individual plies that are successively bonded to one another so as to grow progressively the three-dimensional shape of the support within which there is arranged at least one flexuous channel (4i) according to any one of claims 1 to 20.

22. A method according to claim 21, **characterized in that** it consists in making the support by an additive technique in which, by using computer assisted design software, the shape of the support is subdivided into slices, these slices being made one by one in the form of individual plies that are superposed and bonded together in succession by repeating the following two steps: depositing a bed of powder material for forming the support, the bed being continuous, uniform, and of constant thickness, and, at the level of said ply, covering an area that is greater than the section of said porous body to be formed; and consolidating a portion of the deposited material in localized manner in accordance with a pattern determined for each ply so as to create the individual ply; these two steps being repeated in such a manner as to ensure, at each repetition, that the individual ply formed in this way is simultaneously bonded with the previously formed ply so as to cause the shape of the support to grow progressively.
